# EUROPEAN PATENT APPLICATION

(11) **EP 4 407 543 A1**
(43) Date of publication of application: **31.07.2024**
(21) Application number: 22893270.3
(22) Date of filing: 11.11.2022
(51) Int. Cl.: G06Q 10/1093

(54) **METHOD AND ELECTRONIC DEVICE FOR DISPLAYING RECOMMENDATION INFORMATION**

(30) Priority: 12.11.2021 KR 20210155924; 10.11.2022 KR 20220149880
(71) Applicant: Samsung Electronics Co., Ltd., Suwon-si, Gyeonggi-do 16677 (KR)
(72) Inventor: LEE, Hyeonsu, Suwon-si, Gyeonggi-do 16677 (KR); KIM, Jungbae, Suwon-si, Gyeonggi-do 16677 (KR); LEE, Euntaik, Suwon-si, Gyeonggi-do 16677 (KR); KO, Jaeho, Suwon-si, Gyeonggi-do 16677 (KR); KIM, Hyesoo, Suwon-si, Gyeonggi-do 16677 (KR); MOON, Hyeyoung, Suwon-si, Gyeonggi-do 16677 (KR); PARK, Hyewon, Suwon-si, Gyeonggi-do 16677 (KR); BAE, Sungchan, Suwon-si, Gyeonggi-do 16677 (KR); LEE, Seungyong, Suwon-si, Gyeonggi-do 16677 (KR); LEE, Hyeonseung, Suwon-si, Gyeonggi-do 16677 (KR); HAM, Yookyung, Suwon-si, Gyeonggi-do 16677 (KR)
(74) Representative: HGF
(86) International application number: PCT/KR2022/017756
(87) International publication number: WO 2023/085851

(57) **Abstract**

According to various embodiments, an electronic device may comprise a display module, a processor, and a memory operatively connected to the display module and the processor. The memory can store instructions that allow, when executed, in response to reception of at least one piece of content, the processor to check whether an application corresponding to the at least one piece of content is an information-sharing application, extract schedule-related information on the basis of the received at least one piece of content if the application is the information-sharing application, generate at least one piece of recommendation information on the basis of the extracted schedule-related information in response to execution of a schedule-related application, and display the generated at least one piece of recommendation information through the display module. Various other embodiments are possible.

## Description

### [Technical Field]

Various embodiments relate to a method and an electronic device for displaying recommendation information.

### [Background Art]

Electronic devices, such as recently released smartphones, wearable electronic devices (e.g., wearable watches and/or wearable glasses), and/or tablet devices, may access a wireless communication server (e.g., an Internet server) to be driven in an on-line method, and wirelessly transmit and receive data to and from external electronic devices. Electronic devices and external electronic devices may transmit and receive various types of data (e.g., messages, images, files).

Electronic devices and external electronic devices may be interconnected with each other, and may transmit or receive messages (e.g., content) to or from each other. For example, the messages may be messages including schedule-related information such as time information and/or place information. The electronic devices may extract various information (e.g., schedule-related information, date information, time information, and place information) included in the messages, and utilize the extracted various information when performing configured functions (e.g., a schedule-related function, a schedule-related application).

### [Disclosure of Invention]

### [Technical Problem]

When an electronic device acquires content (e.g., messages, images, files) from an external electronic device, the electronic device may extract various information (e.g., schedule-related information, date information, time information, and/or place information) included in the content, and at least partially utilize the extracted information when performing a function related to a schedule (e.g., when executing an application related to a schedule). The electronic device may multitask various programs, which may cause difficulties in using the desired information at a desired time based on a large amount of extracted information.

According to various embodiments, when acquiring content (e.g., a message) from an external electronic device, the electronic device may identify whether the program (e.g., an application) that has transmitted the content is a program in which information sharing is allowed, and extract various information (e.g., schedule-related information, date information, time information, and/or place information) and store the information in a memory if the program is a program in which information sharing is allowed.

According to various embodiments, the electronic device may provide recommendation information to a user based on the extracted information in response to execution of a content-related application (e.g., an application utilizing information included in the content, a schedule-related application, a schedule application, and a calendar application).

Technical challenges to be achieved in the disclosure are not limited to the technical challenges mentioned above, and other technical challenges not mentioned will be clearly understood by those skilled in the art of the disclosure from the description below.

### [Solution to Problem]

According to an embodiment, an electronic device may include a display module, a processor, and a memory operatively connected to the display module and the processor. The memory may store instructions that allow, when executed, the processor to identify whether an application corresponding to the at least one piece of content is an application in which information sharing is allowed in response to reception of at least one piece of content, extract schedule-related information based on the received at least one piece of content when the application is the application in which information sharing is allowed, generate at least one piece of recommendation information based on the extracted schedule-related information in response to execution of a schedule-related application, and display the generated at least one piece of recommendation information through the display module.

A method of displaying recommendation information, according to an embodiment may include identifying whether an application corresponding to the at least one piece of content is an application in which information sharing is allowed in response to reception of at least one piece of content, extracting schedule-related information based on the received at least one piece of content when the application is the application in which information sharing is allowed, generating at least one piece of recommendation information based on the extracted schedule-related information in response to execution of a schedule-related application, and displaying the generated at least one piece of recommendation information.

According to an embodiment, a non-transitory computer-readable storage medium (or computer program product) storing one or more programs may be described. According to an embodiment, the one or more programs may include, when executed by a processor of an electronic device, instructions that perform identifying whether an application corresponding to the at least one piece of content is an application in which information sharing is allowed in response to reception of at least one piece of content, extracting schedule-related information based on the received at least one piece of content when the application is the application in which information sharing is allowed, generating at least one piece of recommendation information based on the extracted schedule-related information in response to execution of a schedule-related application, and displaying the generated at least one piece of recommendation information

### [Advantageous Effects of Invention]

According to various embodiments, when acquiring content (e.g., a message), an electronic device may identify whether the program (e.g., an application) that has transmitted the content is a program in which information sharing is allowed. When at least one piece of content is received through an application in which information sharing is allowed, the electronic device may extract various pieces of information (e.g., schedule-related information, time information, place information) included in the received at least one piece of content and store the information in a memory. The electronic device may generate at least one piece of recommendation information based on the extracted various information in response to execution of a schedule-related application for registration of the schedule, and intuitively provide the generated at least one piece of recommendation information to a user.

According to an embodiment, when a user registers a schedule by using information included in the content or configures a notification, the electronic device 101 may automatically provide the user with at least one piece of recommendation information according to the registration time point of the schedule and/or the configuration time point of the notification. The user may register a schedule or configure a notification more conveniently. The electronic device may select and provide at least one piece of recommendation information preferred by the user based on the user's usage pattern information and usage history information, and provide the information to the user, and the user's convenience may be improved when the user registers a schedule. In addition, various effects directly or indirectly identified through the disclosure may be provided.

### [Brief Description of Drawings]

In relation to the description of the drawings, identical or similar reference numerals may be used for identical or similar components.
FIG. 1 is a block diagram of an electronic device in a network environment according to embodiments of the disclosure.
FIG. 2 is an exemplary diagram illustrating a method of extracting and providing recommendation information based on content acquired from an external electronic device according to an embodiment of the disclosure.
FIG. 3 is a block diagram of an electronic device that provides recommendation information related to a schedule according to an embodiment of the disclosure.
FIG. 4 is a flowchart illustrating a method of providing recommendation information to a user based on schedule-related information according to an embodiment of the disclosure.
FIG. 5 is a flowchart illustrating a method of providing recommendation information when a configured condition is satisfied based on the time of extraction of schedule-related information according to an embodiment of the disclosure.
FIG. 6 is a flowchart illustrating a method of providing recommendation information to a user based on the priority of schedule-related information according to an embodiment of the disclosure.
FIG. 7A is an exemplary diagram illustrating a first embodiment of providing recommendation information based on time information included in schedule-related information according to an embodiment of the disclosure.
FIG. 7B is an exemplary diagram illustrating a second embodiment of providing recommendation information based on time information and place information included in schedule-related information according to an embodiment of the disclosure.
FIG. 8A is an exemplary diagram illustrating a first embodiment of providing recommendation information including a deadline for a schedule based on time information included in schedule-related information according to an embodiment of the disclosure.
FIG. 8B is an exemplary diagram illustrating a second embodiment of providing recommendation information including specific content based on place information included in schedule-related information according to an embodiment of the disclosure.
FIG. 9 is an exemplary diagram illustrating an embodiment of providing recommendation information based on schedule-related information included in the image when the acquired content according to an embodiment of the disclosure is an image.
FIG. 10A is an exemplary diagram illustrating an embodiment of providing recommendation information when the number of displayed pages is less than or equal to a configured threshold value based on the time when schedule-related information is extracted according to an embodiment of the disclosure.
FIG. 10B is an exemplary diagram illustrating an embodiment of providing recommendation information when a schedule-related app is used based on the time when schedule-related information is extracted according to an embodiment of the disclosure.
FIG. 10C is an exemplary diagram illustrating an embodiment of providing recommendation information when a schedule-related app is continuously used based on the time when schedule-related information is extracted according to an embodiment of the disclosure.
FIG. 11A is an exemplary diagram illustrating an embodiment of providing a plurality of recommendation information or selectively providing one piece of recommendation information when a plurality of schedule-related information is extracted according to an embodiment of the disclosure.
FIG. 11B is an exemplary diagram illustrating an embodiment of providing a plurality of recommendation information or selectively providing one piece of recommendation information in more detail than FIG. 11A when a plurality of schedule-related information is extracted according to an embodiment of the disclosure.
FIG. 12 is an exemplary diagram illustrating a display form of recommendation information according to an embodiment of the disclosure.
FIG. 13A is an exemplary diagram illustrating a method of configuring an information-sharing application according to an embodiment of the disclosure.
FIG. 13B is an exemplary diagram illustrating a notification message for configuring an information-sharing application according to an embodiment of the disclosure.
FIG. 14 is an exemplary diagram illustrating a method of storing usage pattern information according to an embodiment of the disclosure.

### [Mode for the Invention]

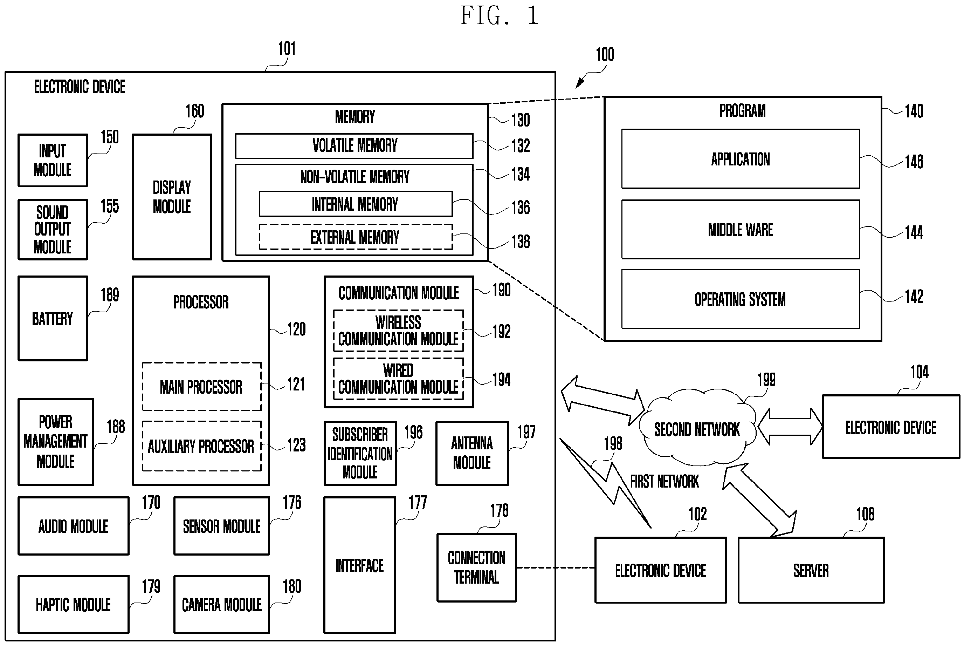

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

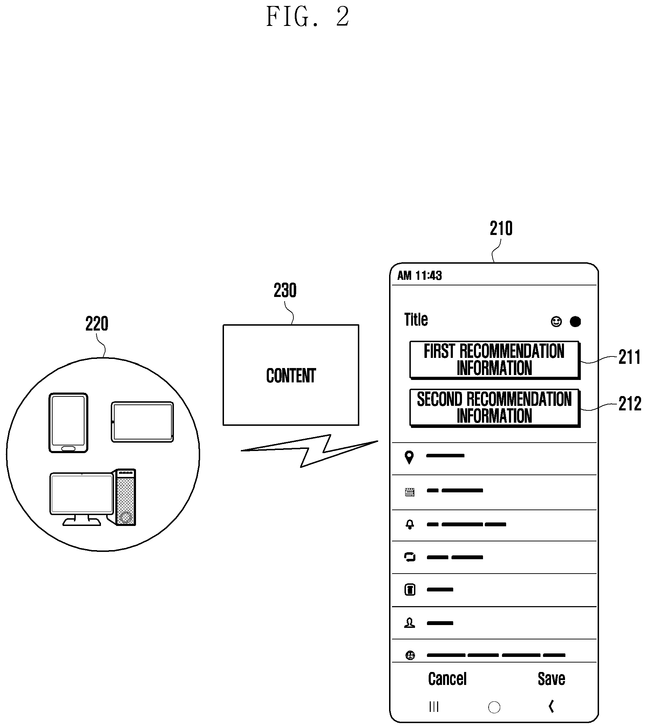

FIG. 2 is an exemplary diagram illustrating a method of extracting and providing recommendation information based on content acquired from an external electronic device according to various embodiments of the disclosure.

According to various embodiments, an electronic device 210 (e.g., the electronic device 101 of FIG. 1) may store at least one program (e.g., the program 140 of FIG. 1) as software in a memory (e.g., the memory 130 of FIG. 1). For example, the at least one program 140 may include at least one application (e.g., the application 146 of FIG. 1). For example, the application 146 may be defined as an application software (e.g., an application program) developed to perform a specific task, and may provide various functions to a user so that the user may efficiently perform the specific task.

According to an embodiment, the electronic device 210 may perform wireless communication with an external electronic device 220 (e.g., the electronic devices 102 and 104 of FIG. 1), a smartphone, a tablet, and a PC through a communication module (e.g., the communication module 190 of FIG. 1). For example, the electronic device 210 may transmit (transfer) at least one piece of content 230 (e.g., a message, an image, and/or a file) to the external electronic device 220 based on a specific application, or receive at least one piece of content 230 from the external electronic device 220.

According to an embodiment, the electronic device 210 may perform wireless communication with the external electronic device 220 through a server (not illustrated) (e.g., the server 108 of FIG. 1), and at least one piece of content 230 may be transmitted and received to and from each other. For example, the electronic device 210 may acquire at least one piece of content 230 based on a specific application from the external electronic device 220, and may extract schedule-related information (e.g., date information, time information, place information, and/or schedule-related information) included in the at least one piece of content 230 when the specific application is an application in which information sharing is allowed. For example, an application in which information sharing is allowed may include an application in which information sharing authority is allowed at least partially so that content generated based on the corresponding application is shared with another application. When the content is identified based on the application in which information sharing is allowed, the electronic device 210 may extract schedule-related information based on the identified content.

The electronic device 210 may store the extracted schedule-related information in a memory (e.g., the memory 130 of FIG. 1) as information related to a schedule-related application. In response to the execution of the schedule-related application, the electronic device 210 may generate at least one piece of recommendation information (e.g., first recommendation information 211 and second recommendation information 212) based on the schedule-related information stored in the memory 130. The electronic device 210 may display at least one piece of recommendation information (e.g., first recommendation information 211 and second recommendation information 212) through a display module (e.g., the display module 160 of FIG. 1).

According to an embodiment, the electronic device 210 may receive at least one piece of content 230 from the external electronic device 220, extract schedule-related information (e.g., date information, time information, place information, and/or schedule-related information) based on the received at least one piece of content 230, and provide at least one piece of recommendation information to a user based on the extracted schedule-related information. According to an embodiment, when the user registers a schedule or configures a notification, at least one piece of recommendation information is automatically provided to the user, so that the user's convenience may be improved.

According to another embodiment, the electronic device 210 may generate at least one piece of content 230 based on an application in which information sharing is allowed, and store the generated at least one piece of content 230 in the memory 130 as information related to a schedule-related application. For example, at least one piece of content 230 may include a memo written by the user and/or an image generated by the user. According to another embodiment, the electronic device 210 may download at least one piece of content 230 through the server 108 based on an application in which information sharing is allowed, or may extract schedule-related information based on the downloaded content.

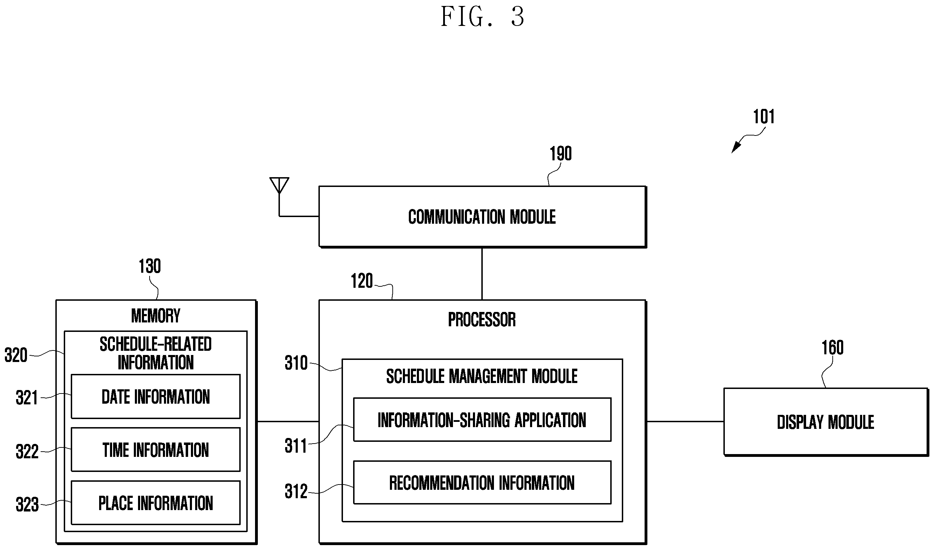

FIG. 3 is a block diagram of an electronic device that provides recommendation information related to a schedule according to various embodiments of the disclosure.

The electronic device (e.g., the electronic device 101 of FIG. 1) of FIG. 3 may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, and/or a file) to and from each other. When receiving at least one piece of content from the external electronic device 220, the electronic device 101 may identify whether the application related to the at least one piece of content is an application in which information sharing is allowed. For example, when the at least one piece of content is received based on an application in which information sharing is allowed, the electronic device 101 may extract schedule-related information 320 (e.g., date information 321, time information 322, and place information 323) included in at least one piece of content. For example, the electronic device 101 may store the extracted schedule-related information 320 in the memory 130 as information related to a schedule-related application. The electronic device 101 may provide at least one piece of recommendation information to a user based on the extracted schedule-related information 320 in response to the execution of the schedule-related application.

According to another embodiment, the electronic device 101 may extract schedule-related information 320 included in the at least one piece of content even when at least one piece of content is generated or downloaded based on an application in which information sharing is allowed.

According to an embodiment, the electronic device 101 may automatically provide recommendation information related to registration of a schedule to the user in response to the execution of a schedule-related application (e.g., a situation in which the user intends to register a schedule related to the at least one piece of content), and the user's convenience according to the registration of the schedule may be improved.

Referring to FIG. 3, the electronic device 101 may include a processor (e.g., the processor 120 of FIG. 1), a memory (e.g., the memory 130 of FIG. 1), a display module (e.g., the display module 160 of FIG. 1), and/or a communication module (e.g., the communication module 190 of FIG. 1). The electronic device 101 may acquire at least one piece of content from the external electronic device 220 through the communication module 190, extract the schedule-related information 320 included in the content, and store the same in the memory 130 as information related to the schedule-related application. According to an embodiment, the processor 120 may include a schedule management module 310 for managing a schedule. The processor 120 may manage an information-sharing application 311 and recommendation information 312 under the control of the schedule management module 310. For example, the schedule management module 310 may generate recommendation information 312 to perform schedule-related functions, such as registration, change, update, and deletion of a schedule, based on the extracted schedule-related information 320.

According to an embodiment, the processor 120 may execute a program (e.g., the program 140 of FIG. 1) stored in the memory 130 to control at least one other component (e.g., a hardware or software component), and may perform various data processing or operations. The processor 120 may include the schedule management module 310 for performing a program and function related to a schedule, and may perform a schedule-related process based on the schedule management module 310. Hereinafter, among processes processed by the processor 120, a process related to a schedule may be interpreted as being processed by the schedule management module 310.

According to an embodiment, the schedule management module 310 may manage the information-sharing application 311. For example, the processor 120 may configure whether to share information in response to each of the applications stored in the memory 130. The processor 120 may configure an application highly related to schedule registration as the information-sharing application 311. For example, when a first message based on a first application is received, a schedule-related application (e.g., a calendar application) is executed, and a schedule is registered and stored, the first application may be configured as the information-sharing application 311.

According to an embodiment, the processor 120 may display a notification message for configuring the information-sharing application 311 through the display module 160 based on at least one application that is highly related to schedule registration, and store the at least one application in the information-sharing application 311 by a user's selection.

According to an embodiment, when at least one piece of content is received, the processor 120 may identify whether an application corresponding to the at least one piece of content is included in the information-sharing application 311. If the application is included in the information-sharing application 311, the processor 120 may extract schedule-related information 320 included in at least one piece of content. For example, the schedule-related information 320 may include date information 321, time information 322, and/or place information 323. The processor 120 may generate recommendation information 312 based on the schedule-related information 320. According to an embodiment, the electronic device 101 may manage the recommendation information 312 under the control of the schedule management module 310.

According to an embodiment, the processor 120 may generate recommendation information 312 based on the extracted schedule-related information 320, and store the generated recommendation information 312 in the memory 130. The processor 120 may display the recommendation information 312 stored in the memory 130 through the display module 160 in response to the occurrence of an event (e.g., execution of a schedule-related application) related to the recommendation information 312.

According to an embodiment, in response to the execution of a schedule-related application (e.g., an application that utilizes information included in the content, a schedule application, and a calendar application), the processor 120 may generate recommendation information 312 based on the schedule-related information 320, and display the generated recommendation information 312 through the display module 160. According to another embodiment, the processor 120 may generate recommendation information 312 based on the schedule-related information 320 regardless of whether the schedule-related application is executed, and store the generated recommendation information 312 in the memory 130. The processor 120 may display the recommendation information 312 stored in the memory 130 through the display module 160 in response to the execution of the schedule-related application.

According to an embodiment, when at least one piece of content is received based on an application in which information sharing is allowed (e.g., the information-sharing application 311), the schedule management module 310 may extract schedule-related information 320 included in the at least one piece of content, and store the extracted schedule-related information 320 in the memory 130. For example, at least one piece of content may include at least one of content (e.g., a memo written by the user and/or an image) generated by the electronic device 101 based on an application in which information sharing is allowed (e.g., the information-sharing application 311), content acquired from the external electronic device 220, or content (e.g., an image, information, a file, and/or data) downloaded through a server (e.g., the server 108 of FIG. 1). For example, the schedule-related information 320 may include information on a counterpart to perform the schedule, the date on which the schedule is performed (e.g., date information 321), the day of the week, the time (e.g., time information 322), and/or information on a place (e.g., place information 323). The schedule-related information 320 may include information corresponding to "six principles" (e.g., who, when, where, what, how, and why) (e.g., 5W1H (who, when where, what, why, how) related to the schedule.

According to an embodiment, the schedule management module 310 may generate at least one piece of recommendation information 312 based on the schedule-related information 320, and provide the at least one piece of recommendation information 312 to a user through the display module 160. For example, when a schedule-related application (e.g., a calendar application) is executed and a specific date is selected, the schedule management module 310 may display time information 322 corresponding to date information 321 based on the schedule-related information 320. For another example, when a specific date is not selected while the schedule-related application is executed, the schedule management module 310 may display time information 322 corresponding to today's date based on today's date. When a user intends to register a place related to a schedule (when the place field for place registration is selected), the schedule management module 310 may display the place information 323 included in the schedule-related information 320. According to an embodiment, the electronic device 101 may identify the execution of a schedule-related application (e.g., a calendar application), and detect the occurrence of an event for registering a schedule (e.g., date information 321, time information 322, and place information 323) in the application. The electronic device 101 may display at least one piece of recommendation information 312 through the display module 160 in response to the occurrence of the event.

According to an embodiment, the memory 130 may store schedule-related information 320 included in at least one piece of content. According to an embodiment, the processor 120 may extract schedule-related information 320 based on at least one piece of content acquired from the external electronic device 220, and store the extracted schedule-related information 320 in the memory 130. For example, the memory 130 may include a temporary storage medium such as a buffer. The schedule-related information 320 may include date information 321 including a date on which a schedule is performed, time information 322 including a day of the week and/or time, and/or place information 323 including a place where a schedule is performed. For example, when at least one piece of content is a message (e.g., content composed of text), the processor 120 may analyze the text included in the message and extract at least one of date information 321, time information 322, and/or place information 323.

According to an embodiment, the electronic device 101 may configure a time for maintaining the extracted schedule-related information 320, and for the configured time, the memory 130 may store the schedule-related information 320. For example, if the configured time elapses from the extracted time point after the schedule-related information 320 is extracted, the electronic device 101 may delete the schedule-related information 320 stored in the memory 130.

According to an embodiment, the electronic device 101 may configure the number of times of threads for maintaining the extracted schedule-related information 320 as a threshold value, and store the schedule-related information 320 in the memory 130 within a range not exceeding the threshold value. For example, the thread may refer to a unit in which a process is executed based on a program installed in the electronic device 101. For example, when another function is performed in the first program (e.g., a schedule-related application), or the screen is changed, the number of threads may increase. Even when the second program other than the first program is executed and a function for the second program is performed, the number of threads may increase. In addition, even when the first program is executed and the second program is executed, the number of threads may increase. According to an embodiment, the electronic device 101 may count the number of threads occurring from the extracted time point after the schedule-related information 320 is extracted, and delete the schedule-related information 320 stored in the memory 130 when the number of threads exceeds a configured threshold value.

According to an embodiment, the memory 130 may store usage pattern information of a user. According to an embodiment, the usage pattern information may include various information such as the type of application program mainly executed, the type of application program mainly executed at a specific time point or at a specific place, the execution order of the application program, and/or the type of application program executed when at least one piece of content is received from the external electronic device 220. For example, the usage pattern information may accumulate a user's usage history (e.g., history) and may be continuously updated. According to an embodiment, the usage pattern information may also include an information registration order for which information is first registered among date information 321, time information 322, and/or place information 323 when the user registers a schedule.

According to an embodiment, when content based on the first application is acquired, the usage pattern information may include a function performed by a user and information related to the application. For example, when acquiring content based on the first application, a schedule-related application may be executed, and a schedule based on the schedule-related application may be registered. The usage pattern information may include information on an application and function to be executed after the acquisition of the content. According to an embodiment, the processor 120 may select the information-sharing application 311 based on the user's usage pattern information, and provide a notification message for storing the information-sharing application 311 to the user.

According to an embodiment, the display module 160 may display at least one piece of recommendation information 312 generated based on the schedule-related information 320. According to an embodiment, the processor 120 may identify the execution of an application related to a schedule, and detect the occurrence of an event for registering a schedule in the application. For example, when detecting the execution of an application related to the schedule (e.g., a schedule-related application), when detecting the execution of instructions to generate a schedule, and/or when detecting that at least one of a date item, a time item, and/or a place item for the schedule is selected in the user interface for adding a schedule, the processor 120 may identify that an event for registering the schedule has occurred. The processor 120 may display at least one piece of recommendation information through the display module 160 in response to the occurrence of the event. For example, in response to the selection of a time item (e.g., a time field) for the schedule, the processor 120 may display the first recommendation information including the time information 322 at the time of recording the time of the schedule, or in response to the selection of a place item (e.g., a place field) for the schedule, the processor 120 may display the second recommendation information including the place information 323 at the time of recording the schedule.

According to an embodiment, at least one piece of recommendation information may be generated based on at least one of date information 321, time information 322, and place information 323. For example, at least one piece of recommendation information may be generated based on the extracted schedule-related information 320 (e.g., date information 321, time information 322, and place information 323) and stored in the memory 130. According to an embodiment, when a user selects a date to register a schedule, the electronic device 101 may provide the user with the first recommendation information including the time information 322 according to the time of time registration, and provide the user with the second recommendation information including the place information 323 according to the time of place registration. For example, when a specific date is not selected, the electronic device 101 may provide the first recommendation information to the user based on today's date, according to the time of time registration, and provide the second recommendation information to the user according to the time of place registration. According to another embodiment, information extracted based on at least one piece of content is not limited to date information 321, time information 322, and/or place information 323, and may include various information related to a schedule. The electronic device 101 may provide various types of recommendation information to the user based on various types of information related to the schedule.

According to an embodiment, the communication module 190 may communicate with the external electronic device 220 through a communication method that may be supported by the electronic device 101. According to an embodiment, the electronic device 101 may transmit content to the external electronic device 220 or acquire content from the external electronic device 220 through the communication module 190. According to an embodiment, the electronic device 101 may perform wireless communication with the external electronic device 220 based on a specific application program, and transmit and receive data to and from each other.

According to various embodiments, the electronic device 101 may perform wireless communication with the external electronic device 220 through the communication module 190, and receive at least one piece of content 230 (e.g., a message, an image, and a file) from the external electronic device 220. The electronic device 101 may identify whether the received application corresponding to the at least one piece of content 230 corresponds to the information-sharing application 311. When the corresponding application is included in the information-sharing application 311, the electronic device 101 may extract schedule-related information 320 (e.g., date information 321, time information 322, place information 323, and/or schedule-related information) included in the at least one piece of content 230 and store the same in the memory 130. For example, the electronic device 101 may maintain the schedule-related information 320 stored in the memory 130 when a time corresponding to the first threshold value does not elapse based on the time when the schedule-related information is extracted. When the number of threads that have occurred does not exceed a thread value corresponding to the second threshold value, based on the time when the schedule-related information 320 is extracted, the electronic device 101 may maintain the schedule-related information 320 stored in the memory 130.

According to an embodiment, the electronic device 101 may identify the execution of a schedule-related application (e.g., a calendar application) and detect an event for registering a schedule. For example, an event for schedule registration may include at least one event of an execution event for an application related to the schedule, an execution event for an instruction for generating the schedule, and/or a selection event for at least one of a date item, a time item, or a place item in a user interface for schedule registration. In response to detection of the event, the electronic device 101 may generate at least one piece of recommendation information based on the schedule-related information 320 (e.g., date information 321, time information 322, and place information 323) stored in the memory 130. For example, the electronic device 101 may generate recommendation information based on the schedule-related information 320 maintained in the memory 130 and provide the same to the user. According to an embodiment, in response to detection of a selection event for a time item, the electronic device 101 may generate time recommendation information based on the time information 322, and display the generated time recommendation information through the display module 160. According to an embodiment, in response to detection of a selection event for a place item, the electronic device 101 may generate place recommendation information based on the place information 323, and display the generated place recommendation information through the display module 160. According to an embodiment, the electronic device 101 may register a schedule in a schedule-related application based on the recommendation information in response to a user input for recommendation information (e.g., time recommendation information, place recommendation information.

According to various embodiments, electronic devices 101, and 210 may include a display module 160, a processor 120, and a memory 130 operatively connected to the display module 160 and the processor 120. The memory 130 may store instructions that allow, when executed, the processor 120 to identify whether an application corresponding to the at least one piece of content 230 is an application in which information sharing is allowed 311 in response to reception of at least one piece of content, extract schedule-related information 320 based on the received at least one piece of content 230 when the application is the application in which information sharing is allowed 311, generate at least one piece of recommendation information 312 based on the extracted schedule-related information 320 in response to execution of a schedule-related application, and display the generated at least one piece of recommendation information 312 through the display module 160.

According to an embodiment, the processor 120 may store the extracted schedule-related information in the memory 130 as information related to the schedule-related application. The processor 120 may generate the at least one piece of recommendation information 312 based on the schedule-related information stored in the memory 130 in response to execution of the schedule-related application.

According to an embodiment, the processor 120 may receive first content based on a first application. The processor 120 may execute the schedule-related application within a configured time in response to reception of the first content. The processor 120 may configure the first application as the information-sharing application when a schedule is registered based on the received first content.

According to an embodiment, the processor 120 may give a first score to the first application based on the first content received through the first application when schedule registration for the schedule-related application is completed. The processor 120 may display a notification message for configuration as the information-sharing application through the display module 160 when the cumulative score of the first application exceeds a configured first threshold score. The processor 120 may configure the first application as the information-sharing application in response to a user input for the notification message.

According to an embodiment, the processor 120 may identify schedule-related information stored in the memory 130 in response to execution of the schedule-related application. The processor 120 may generate the at least one piece of recommendation information 312 based on usage pattern information and usage history related to the identified schedule-related information.

According to an embodiment, the processor 120 may give a second score to a first phrase when it is identified that the first phrase is registered as a schedule among the schedule-related information. The processor 120 may generate the at least one piece of recommendation information 312 based on the first phrase when the cumulative score of the first phrase exceeds a configured second threshold score.

According to an embodiment, the processor 120 may execute the schedule-related application for a schedule registration. The processor 120 may generate at least one piece of recommendation information based on the schedule-related information in response to an occurrence of the schedule registration event. The occurrence of the schedule registration event is characterized by detecting a schedule registration instruction for registering at least one schedule while the schedule-related application is being executed.

According to an embodiment, the processor 120 may store the extracted schedule-related information in the memory 130. The processor 120 may identify the schedule-related information 320 stored in the memory 130 in response to the execution of the schedule-related application. The processor 120 may generate the at least one piece of recommendation information 312 based on the identified schedule-related information 320.

According to an embodiment, the processor 120 may identify a first time point at which the schedule-related information 320 is extracted and a second time point for generating the at least one piece of recommendation information. The processor 120 may identify whether a time interval between the first time point and the second time point is within a configured first threshold value. The processor 120 may generate the at least one piece of recommendation information 312 based on the schedule-related information 320 when the time interval is within the first threshold value.

According to an embodiment, the processor 120 may identify the number of threads that have occurred between the first time point and the second time point when the time interval exceeds the first threshold value. The processor 120 may identify whether the number of threads is within a configured second threshold value. The processor 120 may generate the at least one piece of recommendation information 312 based on the schedule-related information 320 when the number of threads is within the second threshold value.

According to an embodiment, the processor 120 may identify whether the thread is substantially occurred in the same session when the number of threads exceeds the second threshold value. The processor 120 may generate the at least one piece of recommendation information 312 based on the schedule-related information 320 when the thread occurs in the same session.

According to an embodiment, the processor 120 may identify a priority corresponding to the generated at least one piece of recommendation information. The processor 120 may determine a display order for the at least one piece of recommendation information 312 based on the identified priority. The processor 120 may display the at least one piece of recommendation information 312 through the display module 160 according to the determined display order. The priority corresponding to the at least one piece of recommendation information 312 may be determined based on usage pattern information and usage history stored in the memory 130.

According to an embodiment, the processor 120 may configure a user interface to display the at least one piece of recommendation information in a list form. The processor 120 may display recommendation information with relatively high priority at the top of the list based on the identified priority.

According to an embodiment, the processor 120 may display the recommendation information with relatively high priority to be visually distinct from the rest of the recommendation information. For example, the processor 120 may display the recommendation information with relatively high priority by configuring at least one of the color, size, font, and/or sound effects differently.

According to an embodiment, the processor 120 may determine a priority corresponding to the at least one piece of recommendation information 312 based on the usage pattern information stored in the memory 130 and the usage history of the schedule-related application.

According to an embodiment, the processor 120 may determine one piece of recommendation information corresponding to the schedule-related application based on the identified priority. The processor 120 may display one piece of recommendation information 312 determined to correspond to each of the schedule-related applications.

According to an embodiment, the processor 120 may extract at least one text included in the at least one piece of content 230 as the schedule-related information 320 at least partially. The schedule-related information 320 is characterized by including at least one of information on a counterpart who performs a schedule, date information 321 on which the schedule is performed, information on a day of the week on which the schedule is performed, time information 322 on the schedule, and place information 323 on the schedule.

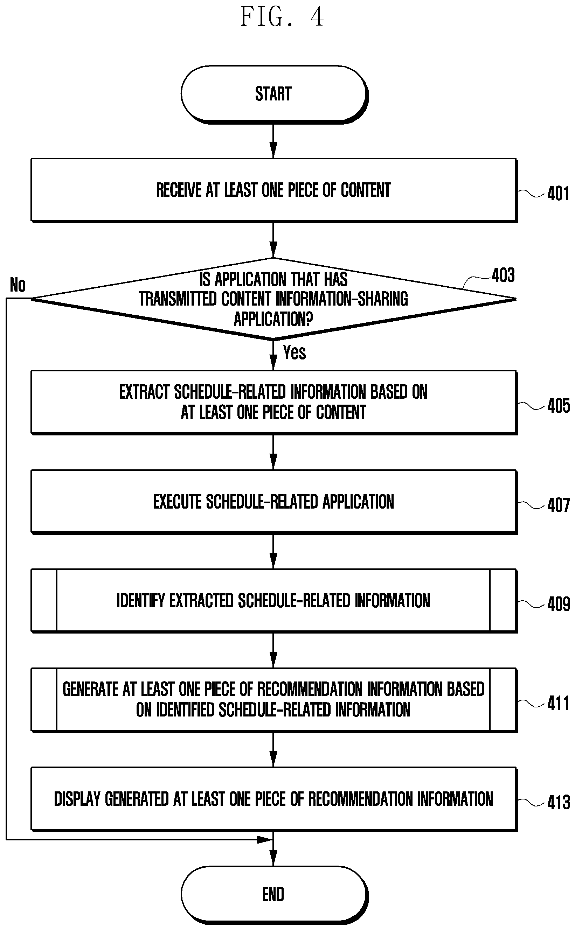

FIG. 4 is a flowchart illustrating a method of providing recommendation information to a user based on schedule-related information according to various embodiments of the disclosure.

In the following embodiments, each operation may be performed sequentially, but is not necessarily performed sequentially. For example, the order of each operation may be changed, and at least two operations may be performed in parallel.

The electronic device (e.g., the electronic device 101 of FIG. 1) of FIG. 4 may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) through a communication module (e.g., the communication module 190 of FIG. 1), and transmit and receive at least one piece of content (e.g., a message, an image, a file, and at least one piece of content 230 of FIG. 2) to and from each other. When receiving at least one piece of content 230 from the external electronic device 220, the electronic device 101 may identify whether the application that transmitted the content 230 is an information-sharing application. When the application that has transmitted the content 230 is an information-sharing application, the electronic device 101 may extract schedule-related information (e.g., the schedule-related information 320 of FIG. 3) included in at least one piece of content 230, and store the extracted schedule-related information 320 in a memory (e.g., the memory 130 of FIG. 1). According to another embodiment, even when at least one piece of content is generated or the at least one piece of content is downloaded, the electronic device 101 may identify whether the at least one piece of content is content based on an information-sharing application, and when the at least one piece of content is content based on the information-sharing application, the electronic device 101 may extract schedule-related information 320 included in the at least one piece of content.

Referring to FIG. 4, in operation 401, a processor (e.g., the processor 120 of FIG. 1) of the electronic device 101 may receive at least one piece of content (e.g., a message, an image, and/or a file). For example, at least one piece of content may include message data including at least one of date information (e.g., date information 321 of FIG. 3), time information (e.g., time information 322 of FIG. 3), and/or place information (e.g., place information 323 of FIG. 3).

In operation 403, the processor 120 may identify whether the application that has transmitted at least one piece of content is an information-sharing application (e.g., an application in which information sharing is allowed, the information-sharing application 311 of FIG. 3). For example, the processor 120 may configure the authority related to information sharing for each of the applications stored in a memory (e.g., the memory 130 of FIG. 3), and store the application in which information sharing is allowed as the information-sharing application 311. The processor 120 may identify whether the application that has transmitted the at least one piece of content is included in the information-sharing application 311.

According to an embodiment, the processor 120 may store a specific application as the information-sharing application 311 based on the user's usage history and usage pattern. For example, when a schedule-related application (e.g., a calendar application) is executed within a configured time after the specific application is executed, and at least one schedule is registered through the schedule-related application, the specific application may be given a score (e.g., +1 point). According to an embodiment, the processor 120 may store the specific application as the information-sharing application 311 in response to the fact that the score of the specific application exceeds a configured first threshold score (e.g., about 10 points). For example, the application stored in the information-sharing application 311 may be an application with highly related to a schedule-related application (e.g., a calendar application).

When the corresponding application is an information-sharing application in operation 403, in operation 405, the processor 120 may extract schedule-related information (e.g., schedule-related information 320, date information 321, time information 322, and/or place information 323 of FIG. 3) based on the at least one piece of content. For example, the processor 120 may identify whether the date information 321 is included based on the character string included in the at least one piece of content, and extract additional schedule-related information (e.g., time information 322, place information 323, and information on completion of schedule registration) if the date information 321 is included. According to an embodiment, the processor 120 may store the extracted schedule-related information 320 in the memory 130 as information related to a schedule-related application. For example, the processor 120 may store the schedule-related information 320 in the memory 130 in the form of a table, as illustrated in Table 1 below.

**[Table 1]**

| Index | App | Date | Time | Place | Completion of schedule registration |
|---|---|---|---|---|---|
| 0 | app1 | 2022/10/01 | 10:00 | Suwon | 1 |
| 1 | app1 | 2022/08/02 | None | Seoul | 0 |
| 2 | app5 | 2022/10/11 | 20:00 | None | 0 |
| 3 | app7 | 2022/08/12 | 11:30 | None | 1 |
| 4 | app1 | 2022/10/21 | None | None | 0 |
| 5 | app1 | 2022/08/22 | None | Suwon | 0 |

For example, the processor 120 may identify the schedule registration completed application and various information based on the schedule-related information 320, and utilize the identified application and information as usage pattern information.

According to an embodiment, in response to the execution of the schedule-related application, the electronic device 101 may generate recommendation information (e.g., recommendation information 312 of FIG. 3) based on the schedule-related information 320 stored in the memory 130 and provide the same to the user.

According to another embodiment, the processor 120 may generate at least one piece of recommendation information 321 based on the schedule-related information 320 stored in the memory 130, and store the generated at least one piece of recommendation information 321 in the memory 130. In response to the occurrence of an event (e.g., execution of a schedule-related application) related to the recommendation information 321, the processor 120 may load at least one piece of recommendation information 321 stored in the memory 130 and display the same through the display module 160.

In operation 407, the processor 120 may execute the schedule-related application. For example, the schedule-related application may be a program that manages a schedule (e.g., a calendar application, a calendar program), and may be installed in the electronic device 101. The processor 120 may execute the schedule-related application in response to an execution command for the schedule-related application. In operation 407, the processor 120 may identify selection of a specific date while the schedule-related application is being executed. For example, the processor 120 may identify the schedule-related information 320 corresponding to the selected date. For another example, the processor 120 may identify the recommendation information 321 corresponding to the selected date.

According to an embodiment, while the schedule-related application is being executed, the processor 120 may identify an operation of selecting a specific date by the user, and determine that an instruction for registering a schedule has occurred. According to an embodiment, the processor 120 may automatically identify the schedule-related information 320 corresponding to today's date in response to the execution of the schedule-related application by configuration (e.g., default configuration). When a user input for selecting a specific date does not occur, the processor 120 may identify the schedule-related information 320 corresponding to the today's date.

In operation 409, the processor 120 may identify the schedule-related information (e.g., the schedule-related information 320 stored in the memory 130) extracted in operation 405. For example, the electronic device 101 may extract schedule-related information 320 based on at least one piece of content 230 acquired from the external electronic device 220, and store the extracted schedule-related information 320 in the memory 130. For example, the schedule-related information 320 may include information on a counterpart to perform the schedule, date information on which the schedule is performed, information on the day of the week, time information, and/or information on a place. The schedule-related information 320 may include information corresponding to "six principles" (e.g., who, when, where, what, how, and why) (e.g., 5W1H (who, when where, what, why, how) related to the schedule. According to an embodiment, the processor 120 may identify the schedule-related information 320 stored in the memory 130 in response to the execution of the schedule-related application.

In operation 411, the processor 120 may generate at least one piece of recommendation information based on the identified schedule-related information 320. For example, when time information (e.g., time information 322 of FIG. 3) is included in the schedule-related information 320, the processor 120 may generate recommendation information for selecting a time based on the time information 322. For another example, when place information (e.g., place information 323 of FIG. 3) is included in the schedule-related information 320, the processor 120 may generate recommendation information for selecting a place based on the place information 323. According to an embodiment, the processor 120 may generate recommendation information based on information included in the schedule-related information 320.

In operation 413, the processor 120 may display at least one piece of recommendation information generated through a display module (e.g., the display module 160 of FIG. 1). For example, when registering a schedule, the processor 120 may provide at least one piece of recommendation information to the user, and register a schedule based on the recommendation information selected by the user.

Referring to FIG. 4, it is illustrated that the schedule-related information 320 is extracted in operation 405, the schedule-related application is executed in operation 407, and at least one piece of recommendation information is generated based on the schedule-related information 320 in operation 411, but is not limited thereto. According to another embodiment, in operation 405, the processor 120 may extract schedule-related information 320 based on the at least one piece of content, and generate at least one piece of recommendation information based on the extracted schedule-related information 320. The processor 120 may store the generated at least one piece of recommendation information in the memory 130. In operations 407 to 411, the processor 120 may load at least one piece of recommendation information stored in the memory 130 in response to the execution of the schedule-related application, and display the at least one piece of recommendation information loaded in operation 413. According to another embodiment, the electronic device 101 may display recommendation information stored in the memory 130 through the display module 160 in response to an event (e.g., execution of a schedule-related application) related to recommendation information.

According to an embodiment, when receiving at least one piece of content, the electronic device 101 may identify whether the application that transmitted the content is the information-sharing application 311, and when the application is included in the information-sharing application 311, extract schedule-related information 320 based on the received at least one piece of content. The electronic device 101 may automatically display recommendation information related to registration of a schedule based on the extracted schedule-related information 320 in response to a situation in which a schedule-related application is executed for schedule registration. According to an embodiment, the electronic device 101 may provide the user with at least one piece of recommendation information according to the schedule registration time, and the user's convenience according to the schedule registration may be improved.

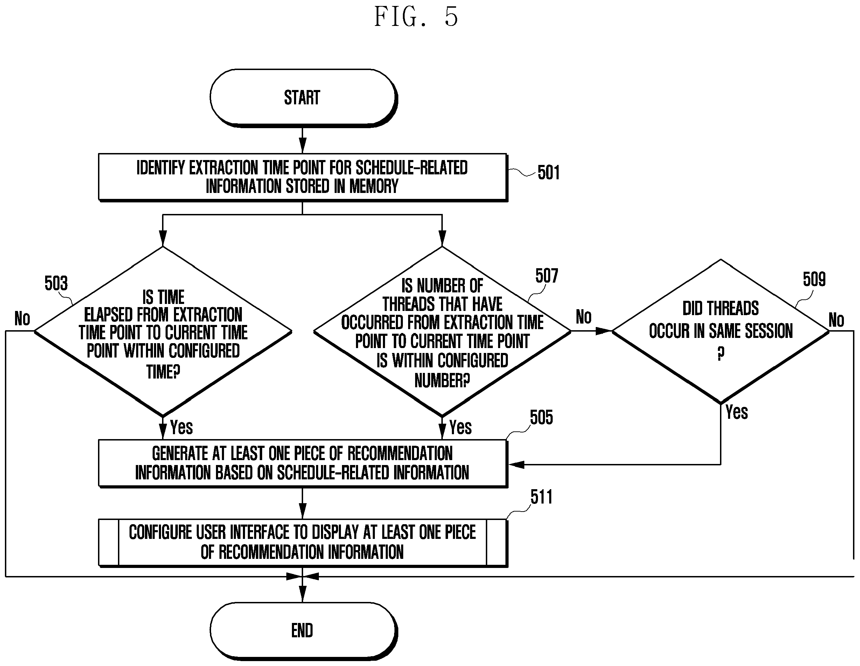

FIG. 5 is a flowchart illustrating a method of providing recommendation information when a configured condition is satisfied based on the time of extraction of schedule-related information according to various embodiments of the disclosure. According to an embodiment, FIG. 5 may include detailed operations of operations 403 to 405 of FIG. 4.

The electronic device (e.g., the electronic device 101 of FIG. 1) of FIG. 5 may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. When acquiring at least one piece of content 230, the electronic device 101 may identify whether the application that transmitted the content 230 is an information-sharing application. When the application that has transmitted the content 230 is an information-sharing application, the electronic device 101 may extract schedule-related information 320 included in the at least one piece of content 230 and provide at least one piece of recommendation information to the user based on the extracted schedule-related information 320.

According to an embodiment, the schedule-related information 320 may be maintained in a state stored in a memory (e.g., the memory 130 of FIG. 1) according to a configured condition. For example, when the configured condition is not satisfied, the electronic device 101 may delete the schedule-related information 320 stored in the memory 130. The memory 130 may include a temporary storage medium (e.g., a buffer) for temporarily storing schedule-related information. The electronic device 101 of FIG. 5 may be in a state in which a schedule-related application is executed.

Referring to FIG. 5, in operation 501, the processor (e.g., the processor 120 of FIG. 1) of the electronic device 101 may identify the extraction time point (e.g., a first time point) for the schedule-related information 320 stored in the memory 130. For example, when at least one piece of content 230 is identified, the processor 120 may extract schedule-related information 320 based on the at least one piece of content 230. The extraction time point (e.g., the first time point) for the schedule-related information 320 may include a time point at which the at least one piece of content 230 is identified. For another example, the processor 120 may detect the occurrence of an event for schedule registration, and identify the extraction time point for the schedule-related information 320 at the time when the event occurs. For another example, the event for schedule registration may include at least one of an execution event for a schedule-related application, an execution event for an instruction to generate the schedule, and/or a selection event for at least one of a time item or a place item in a user interface for schedule registration. The processor 120 may recognize the time point at which the occurrence of the event for schedule registration is detected as a current time point (e.g., a second time point).

In operation 501, the processor 120 may identify an extraction time point (e.g., the first time point) for the schedule-related information 320 and then identify an elapsed time from an extraction time point (e.g., the first time point) to a current time point (e.g., the second time point) in operation 503, or identify the number of threads that have occurred from the extraction time point (e.g., the first time point) to the current time point (e.g., the second time point) in operation 507. Operation 503 may be a first condition for generating recommendation information, and operation 507 may be a second condition for generating recommendation information. According to an embodiment, when at least one of the first condition and the second condition is satisfied, the electronic device 101 may generate recommendation information based on the schedule-related information 320 and provide the recommendation information to the user. Operation 503 and operation 507 may be identified at substantially the same time point.

In operation 503, the processor 120 may identify whether the time elapsed from the extraction time point (e.g., the first time point) to the current time (e.g., the second time point, the occurrence time point of the schedule registration event, and the time point at which recommendation information is generated) is within a configured time (e.g., the first threshold value). For example, the processor 120 may maintain the schedule-related information 320 stored in the memory 130 for a time corresponding to the first threshold value. According to an embodiment, the electronic device 101 may configure a deadline (e.g., a time corresponding to the first threshold value) for utilizing the schedule-related information 320.

When the time elapsed from the extraction time point to the current time point is less than the first threshold value in operation 503, in operation 505, the processor 120 may generate at least one piece of recommendation information based on the schedule-related information 320 stored in the memory 130. For example, when time information (e.g., time information 322 of FIG. 3) is included in the schedule-related information 320, the processor 120 may generate recommendation information including time for performing a schedule. For another example, when place information (e.g., place information 323 of FIG. 3) is included in the schedule-related information 320, the processor 120 may generate recommendation information including a place to perform a schedule.

When the time elapsed from the extraction time point (e.g., the first time point) to the current time point (e.g., the second time point) exceeds the first threshold value in operation 503, the processor 120 may delete or not load the schedule-related information 320 stored in the memory 130. For example, when the elapsed time exceeds the first threshold value, the processor 120 may not generate recommendation information based on the schedule-related information 320.

In operation 511, the processor 120 may configure a user interface to display the generated at least one piece of recommendation information. For example, the processor 120 may configure a user interface including recommendation information to provide recommendation information to the user, and display the user interface through the display module 160. For example, recommendation information may be implemented in the form of a new window so that the recommendation information is displayed in a layout on the existing user interface. According to an embodiment, the processor 120 may add and display recommendation information to the user interface so that a plurality of recommendation information is displayed in the form of a list.

In operation 507, the processor 120 may identify whether the number of threads that have occurred from the extraction time point (e.g., the first time point) to the current time point (e.g., the second time point, the occurrence time point of the schedule registration event, and the time point for generating recommendation information) is within the configured number (e.g., the second threshold value). For example, the processor 120 may maintain the schedule-related information 320 stored in the memory 130 while the number of threads corresponding to the second threshold value occur. For example, the thread may refer to a unit in which a process is executed in a program installed in the electronic device 101. For example, when another function is performed in the first program (e.g., a schedule-related application) or the screen is changed, the number of threads may increase. Even when the second program other than the first program is executed and a function for the second program is performed, the number of threads may increase. The processor 120 may count the threads that have occurred to the current time point based on the extraction time point, and determine whether the number of threads is less than the second threshold value. According to an embodiment, the electronic device 101 may configure a limit on the number of threads (e.g., the number of threads corresponding to the second threshold value) for utilizing the schedule-related information 320.

When the number of threads that have occurred from the extraction time point (e.g., the first time point) to the current time point (e.g., the second time point) is less than the second threshold value in operation 507, in operation 505, the processor 120 may generate at least one piece of recommendation information based on the schedule-related information 320 stored in the memory 130. For example, when time information (e.g., time information 322 of FIG. 3) is included in the schedule-related information 320, the processor 120 may generate recommendation information including time for performing a schedule. For another example, when place information (e.g., place information 323 of FIG. 3) is included in the schedule-related information 320, the processor 120 may generate recommendation information including a place to perform the schedule.

When the number of threads that have occurred from the extraction time point (e.g., the first time point) to the current time point (e.g., the second time point) exceeds the second threshold value in operation 507, in operation 509, the processor 120 may determine whether the threads occurred in the same session. For example, the processor 120 may acquire at least one piece of content from an external electronic device (e.g., the external electronic device 220 of FIG. 2) based on a message application, and perform various functions and operations corresponding to the message application. The same session may include various functions and operations executed in response to the message application.

If the threads occurred in the same session in operation 509, in operation 505, the processor 120 may generate at least one piece of recommendation information based on the schedule-related information 320 stored in the memory 130. According to an embodiment, even when the number of threads exceeds the second threshold value, the electronic device 101 may generate recommendation information based on the schedule-related information 320 if the threads occurred in the same session. If the threads do not occur in the same session in operation 509, the processor 120 may delete or not load the schedule-related information 320 stored in the memory 130. For example, if the number of occurred threads exceeds the second threshold value and the threads do not occur in the same session, the processor 120 may not generate recommendation information based on the schedule-related information 320.

When at least one piece of recommendation information is generated in operation 505, in operation 511, the processor 120 may configure a user interface to display the generated at least one piece of recommendation information. The processor 120 may display the user interface through the display module 160.

According to an embodiment, the electronic device 101 may detect a user input for recommendation information, and register a schedule based on the recommendation information in which the input is detected. For example, when time information is included in the recommendation information in which the input is detected, the processor 120 may input the time information into a time input field (e.g., an area) included in the user interface. For another example, when place information is included in the recommendation information in which the input is detected, the processor 120 may input the place information into a place input field (e.g., an area) included in the user interface.

According to an embodiment, when a user registers a schedule by using the schedule-related information 320 or configures a notification, the electronic device 101 may automatically display recommendation information generated based on the schedule-related information 320 at a registration time point (e.g., a time point of occurrence of a schedule registration event) or a configuration time point of a notification (e.g., a time point of occurrence of a notification configuration event). The electronic device 101 may detect a user's selection of recommendation information, register a schedule based on the recommendation information selected by the user, or configure a notification.

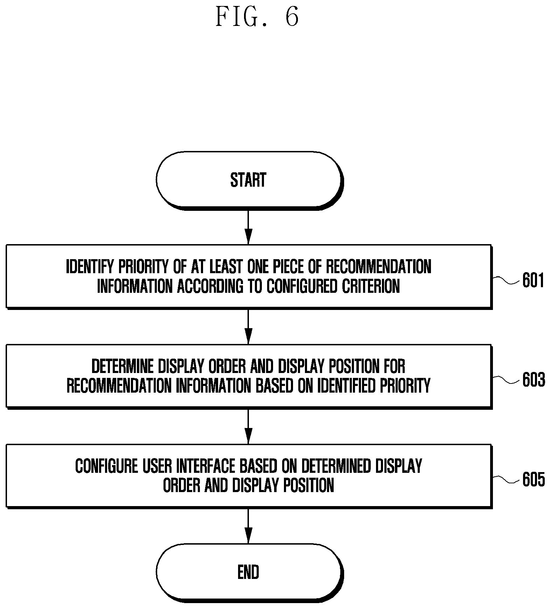

FIG. 6 is a flowchart illustrating a method of providing recommendation information to a user based on the priority of schedule-related information according to various embodiments of the disclosure. According to an embodiment, FIG. 6 may include detailed operations of operation 511 of FIG. 5.

The electronic device (e.g., the electronic device 101 of FIG. 1) of FIG. 6 may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. When acquiring at least one piece of content 230, the electronic device 101 may identify whether the application that transmitted the content 230 is an information-sharing application. When the application that has transmitted the content 230 is an information-sharing application, the electronic device 101 may extract schedule-related information 320 included in the at least one piece of content 230 and provide at least one piece of recommendation information to the user based on the extracted schedule-related information 320. According to an embodiment, the electronic device 101 may display a user interface including at least one piece of recommendation information through a display module (e.g., the display module 160 of FIG. 1). For example, at least one piece of recommendation information may be implemented in the form of a list, and the display order may be determined based on a preconfigured priority. For example, when the priority of at least one piece of recommendation information is high, the recommendation information may be displayed by being placed at the top of the list, or a highlight effect may be applied to distinguish it from the rest of the recommendation information. According to an embodiment, when a user intends to register a schedule based on a schedule-related application, the electronic device 101 may provide the user with high-priority recommendation information, and user convenience according to the schedule registration may be improved.

Referring to FIG. 6, the electronic device 101 may be in a state of configuring a user interface based on at least one piece of recommendation information. In operation 601, the processor (e.g., the processor 120 of FIG. 1) of the electronic device 101 may identify the priority of at least one piece of recommendation information according to a configured criterion. For example, the configured criterion may be preconfigured based on the usage history of the schedule-related application and the usage pattern information stored in the memory (e.g., the memory 130 of FIG. 1). For example, the usage pattern information may include various information such as the type of application program mainly executed, the type of application program mainly executed at a specific time point or at a specific place, the execution order of the application program, and/or the type of application program executed when at least one piece of content is received from the external electronic device 220. The usage pattern information may accumulate a user's usage history (e.g., history) and may be continuously updated. According to an embodiment, the usage pattern information may also include a display order of whether to preferentially display the time information 322 or the place information 323 when the electronic device 101 displays recommendation information. The usage history of the schedule-related application may include the type of recently executed application based on the current time point (e.g., the time point of occurrence of the schedule registration event, the time point for generating recommendation information).

According to an embodiment, the electronic device 101 may determine the priority for at least one piece of recommendation information according to a configured criterion (e.g., usage pattern information, type of recently used application). For example, the priority may be determined such that recommendation information preferred by the user has a high priority. In operation 601, the processor 120 may identify the priority of at least one piece of recommendation information.

In operation 603, the processor 120 may determine a display order and a display position for recommendation information based on the identified priority. For example, when displaying at least one piece of recommendation information, the processor 120 may display the recommendation information in the form of a list. The processor 120 may determine a display order and a display position of recommendation information included in the list based on the priority. For example, recommendation information with relatively high priority may be placed at the top of the list rather than recommendation information having a relatively low priority. According to an embodiment, the processor 120 may display high-priority recommendation information by applying a graphic effect to the recommendation information so that the user can intuitively recognize the recommendation information. For example, the processor 120 may display high-priority recommendation information to be distinguished from the rest of the recommendation information, or display the recommendation information by differently reflecting at least one of color, size, font, and shading effect.

In operation 605, the processor 120 may configure a user interface based on the determined display order and display position. According to an embodiment, in generating and providing recommendation information to a user, the electronic device 101 may display recommendation information in which the display order and display position are determined based on priority so that the user may intuitively select recommendation information.

According to an embodiment, the electronic device 101 may provide at least one piece of recommendation information to the user according to a predetermined registration time, and display recommendation information with relatively high priority to be distinguished from the rest of the recommendation information, or may apply a graphic effect to the high-priority recommendation information. According to an embodiment, the user may intuitively select recommendation information, and convenience according to schedule registration may be improved.

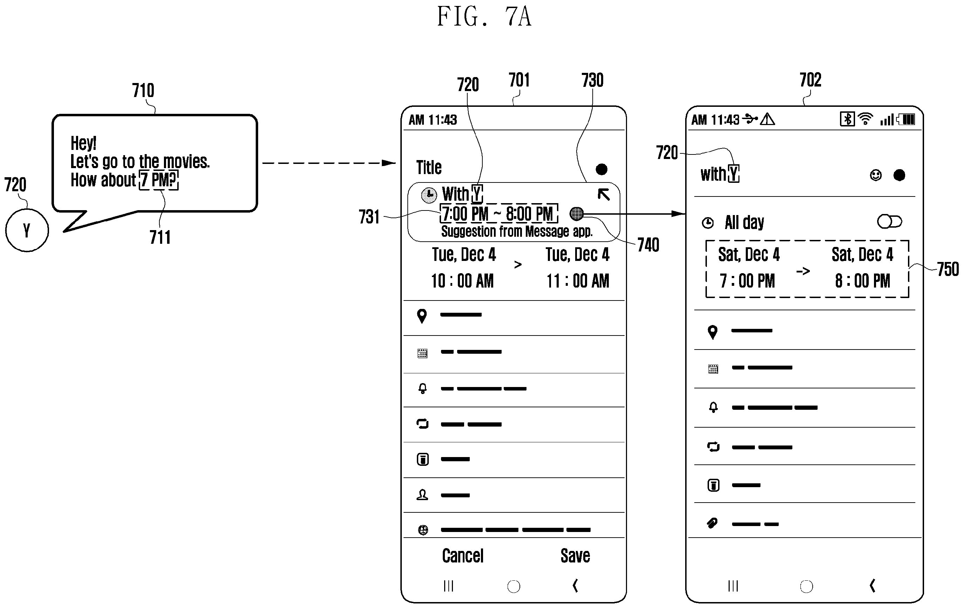

FIG. 7A is an exemplary diagram illustrating a first embodiment of providing recommendation information based on time information included in schedule-related information according to various embodiments of the disclosure.

The electronic device (e.g., the electronic device 101 of FIG. 1) of FIG. 7A may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and/or at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. When receiving at least one piece of content 230 from the external electronic device 220, the electronic device 101 may identify whether the application that transmitted the content 230 is an information-sharing application. For example, the information-sharing application may include an application in which information sharing (e.g., sharing schedule-related information) is allowed to the schedule-related application by user configuration. When the application that has transmitted at least one piece of content 230 corresponds to an information-sharing application, the electronic device 101 may extract schedule-related information (e.g., schedule-related information 320, date information 321, time information 322, and place information 323) included in at least one piece of content 230, and provide at least one piece of recommendation information to a user based on the extracted schedule-related information 320.

Referring to FIG. 7A, a processor (e.g., the processor 120 of FIG. 1) of the electronic device 101 may acquire a message 710 from the external electronic device 210 (e.g., the user 720 of the external electronic device 210, Y). For example, the message 710 is composed based on text and may include schedule-related information 320 (e.g., time information 711).

According to an embodiment, after acquiring the message 710, the electronic device 101 may identify whether an application (e.g., a message application, a chat application) corresponding to the message 710 is an information-sharing application, and extract schedule-related information 320 included in the message 710 when the application is an information-sharing application. The electronic device 101 may store the extracted schedule-related information 320 as information related to a schedule-related application in a memory (e.g., the memory 130 of FIG. 3). The electronic device 101 may identify a first condition in which a configured threshold time has not elapsed from the time when the schedule-related information 320 is extracted, and/or a second condition in which the number of threads that have occurred from the extracted time does not exceed the configured threshold number. The electronic device 101 may detect the execution of the schedule-related application while satisfying one of the first condition and/or the second condition, and display at least one piece of recommendation information 730 for schedule registration in response to the execution of the schedule-related application.

For example, the processor 120 may execute the schedule-related application in response to a request to execute the schedule-related application, and detect the occurrence of a schedule registration event in the schedule-related application. For example, the schedule registration event may include an execution event for a schedule-related application, an execution event for an instruction to generate a schedule, and/or at least one event of a selection event for at least one of a time item (e.g., date, day of the week, time) or a place item within a user interface for schedule registration. For example, the schedule registration event may include an event in which a user input for selecting a specific date occurs. In response to the occurrence of the schedule registration event, the processor 120 may display recommendation information 730 related to schedule registration through a display module (e.g., the display module 160 of FIG. 1). For example, the processor 120 may identify schedule-related information corresponding to the date based on the date selected by a user input, and display the schedule-related information through the display module 160. For example, the recommendation information 730 may be generated based on the schedule-related information 320 (e.g., time information 711, "7 PM") included in the message 710. The recommendation information 730 may include at least one of the name 720 (e.g., identification (ID)) of the counterpart who transmitted the message 710, recommendation data 731 determined based on the time information 711, and/or application program information (e.g., a message app) corresponding to the message 710.

According to an embodiment, the processor 120 may identify schedule-related information corresponding to today's date in response to the execution request of the schedule-related application, and display recommendation information for registration on today's date through the display module 160. For example, the processor 120 may automatically display schedule-related information corresponding to today's date without an operation of selecting a specific date by user configuration.

Referring to FIG. 7A, the processor 120 may display a first screen 701 including at least one piece of recommendation information 730 in response to the occurrence of the schedule registration event. For example, at least one piece of recommendation information 730 may be displayed at least partially overlapping the first screen 701 in a pop-up form, and/or may be displayed in a form included in a partial area of the first screen 701. The processor 120 may display at least one piece of recommendation information 730 corresponding to today's date based on today's date. For example, the first screen 701 and the second screen 702 may include a user interface for schedule registration, and the user interface may be configured to include at least one of a time field, a place field, and/or a schedule content input field for schedule registration. The processor 120 may detect a user input 740 (e.g., a user's touch input, a long press input, a short press input, and/or a double tap input) for determining at least one piece of recommendation information 730 on the first screen 701, and display the second screen 702 in response to detection of the user input 740. For example, the second screen 702 may include a user interface in which recommendation data 731 included in at least one piece of recommendation information 730 is input (e.g., recorded). The processor 120 may input the recommendation data 731 into a time field 750 included in the second screen 702. According to an embodiment, the electronic device 101 may input the recommendation data 731 included in the recommendation information 730 into the time field 750 of the user interface in response to the user's input 740 for the recommendation information 730. According to an embodiment, the electronic device 101 may intuitively provide the user with at least one piece of recommendation information 730 for schedule registration in response to the occurrence of the schedule registration event, and register a schedule corresponding to the selected recommendation information 730 in response to the user's selection input for the at least one piece of recommendation information 730.

According to an embodiment, the electronic device 101 may provide a user with at least one piece of recommendation information 730 in registering a schedule with the counterpart 720 (e.g., a user of the external electronic device 210) that has transmitted the message 710, or registering a schedule to be with the counterpart 720, and the user's convenience for registering a schedule may be improved.

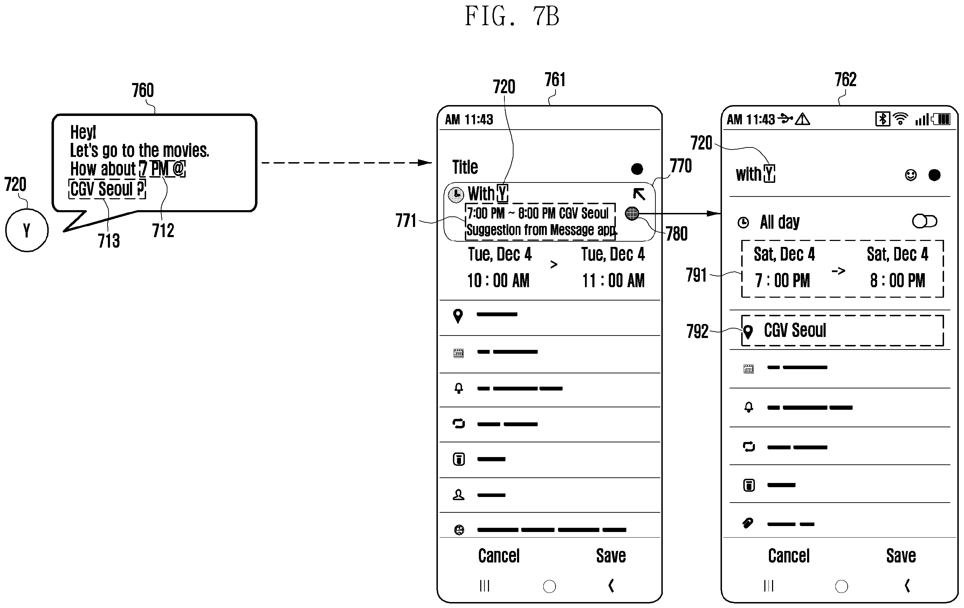

FIG. 7B is an exemplary diagram illustrating a second embodiment of providing recommendation information based on time information and place information included in schedule-related information according to various embodiments of the disclosure.

The electronic device (e.g., the electronic device 101 of FIG. 1) of FIG. 7B may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and/or at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. When receiving at least one piece of content 230 from the external electronic device 220, the electronic device 101 may identify whether the application that transmitted the content 230 is an information-sharing application. For example, the information-sharing application may include an application in which information sharing (e.g., sharing schedule-related information) is allowed to the schedule-related application by user configuration. When the application that has transmitted at least one piece of content 230 corresponds to an information-sharing application, the electronic device 101 may extract schedule-related information (e.g., schedule-related information 320) included in at least one piece of content 230, and provide at least one piece of recommendation information to a user based on the extracted schedule-related information 320.

Referring to FIG. 7B, a processor (e.g., the processor 120 of FIG. 1) of the electronic device 101 may acquire a message 760 from the external electronic device 210 (e.g., the user 720 of the external electronic device 210). For example, the message 760 is composed based on text and may include schedule-related information 320 (e.g., time information 712 and/or place information 713).

According to an embodiment, after acquiring the message 760, the electronic device 101 may identify whether an application (e.g., a message application, a chat application) corresponding to the message 760 is an information-sharing application, and extract schedule-related information 320 included in the message 760 when the application is an information-sharing application. The electronic device 101 may execute a schedule-related application, and display at least one piece of recommendation information 770 for schedule registration in response to the execution of the schedule-related application. For example, the processor 120 may execute the schedule-related application in response to a request to execute the schedule-related application, and detect the occurrence of a schedule registration event in the schedule-related application. In response to the occurrence of the schedule registration event, the processor 120 may display recommendation information 770 related to schedule registration through a display module (e.g., the display module 160 of FIG. 1). For example, the recommendation information 770 may be generated based on the schedule-related information 320 (e.g., time information 712 (e.g., "7 PM") and place information 713 (e.g., "CGV Seoul") included in the message 760. The recommendation information 770 may include at least one of the name 720 (e.g., identification (ID)) of the counterpart who transmitted the message 760, recommendation data 771 determined based on the time information 712 and place information 713, and/or application program information corresponding to the message 760.

Referring to FIG. 7B, the processor 120 may display a first screen 761 including at least one piece of recommendation information 770 in response to the occurrence of the schedule registration event. For example, the first screen 761 and the second screen 762 may include a user interface for schedule registration, and the user interface may be configured to include at least one of a time field, a place field, and/or a schedule content input field for schedule registration. The processor 120 may detect a user input 780 for determining at least one piece of recommendation information 770 on the first screen 761, and display the second screen 762 in response to detection of the user input 780. For example, the second screen 762 may include a user interface in which recommendation data 771 included in at least one piece of recommendation information 770 is input. The processor 120 may input the recommendation data 771 into a time field 791 and a place field 792 included in the second screen 762. According to an embodiment, the electronic device 101 may input the recommendation data 771 included in the recommendation information 770 into the time field 791 and the place field 792 of the user interface in response to the user's input 780 for the recommendation information 770. According to an embodiment, the electronic device 101 may provide the user with at least one piece of recommendation information for schedule registration, and register a schedule corresponding to the recommendation information in response to one touch input.

According to an embodiment, the user's convenience for registering a schedule may be improved.

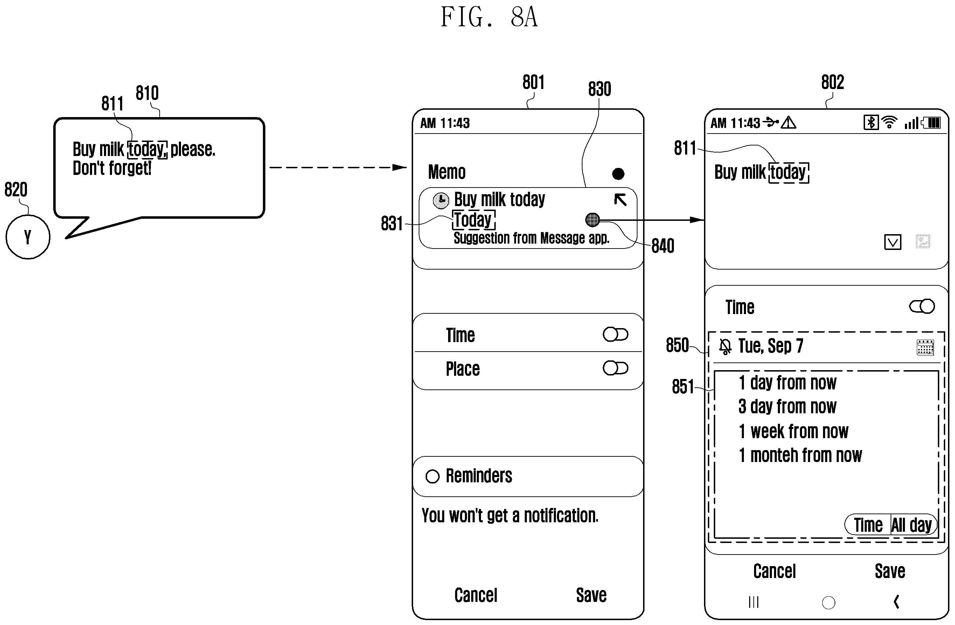

FIG. 8A is an exemplary diagram illustrating a first embodiment of providing recommendation information including a deadline for a schedule based on time information included in schedule-related information according to various embodiments of the disclosure.

The electronic device (e.g., the electronic device 101 of FIG. 1) of FIG. 8A may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and/or at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. When receiving at least one piece of content 230 from the external electronic device 220, the electronic device 101 may identify whether the application that transmitted the content 230 is an information-sharing application. For example, the information-sharing application may include an application in which information sharing (e.g., sharing schedule-related information) is allowed to the schedule-related application by user configuration. When the application that has transmitted at least one piece of content 230 corresponds to an information-sharing application, the electronic device 101 may extract schedule-related information (e.g., schedule-related information 320) included in at least one piece of content 230, and provide at least one piece of recommendation information to a user based on the extracted schedule-related information 320.

Referring to FIG. 8A, a processor (e.g., the processor 120 of FIG. 1) of the electronic device 101 may acquire a message 810 from the external electronic device 210 (e.g., the user 820 of the external electronic device 210, Y). For example, the message 810 is composed based on text and may include schedule-related information 320 (e.g., time information 811 and schedule content).

According to an embodiment, after acquiring the message 810, the electronic device 101 may identify whether an application (e.g., a message application, a chat application) corresponding to the message 810 is an information-sharing application, and extract schedule-related information 320 included in the message 810 when the application is an information-sharing application. The electronic device 101 may execute a schedule-related application, and display at least one piece of recommendation information 830 for schedule registration in response to the execution of the schedule-related application. For example, the processor 120 may execute the schedule-related application in response to a request to execute the schedule-related application, and detect the occurrence of a schedule registration event in the schedule-related application. In response to the occurrence of the schedule registration event, the processor 120 may display recommendation information 830 related to schedule registration through a display module (e.g., the display module 160 of FIG. 1). For example, the recommendation information 830 may be generated based on the schedule-related information 320 (e.g., time information 811, deadline information "today", and schedule content (e.g., Buy milk)) included in the message 810. The recommendation information 830 may include at least one of the name 820 (e.g., identification (ID)) of the counterpart who transmitted the message 810, recommendation data 831 determined based on the time information 811, and/or application program information (e.g., a message app) corresponding to the message 810.

Referring to FIG. 8A, the processor 120 may display a first screen 801 including at least one piece of recommendation information 830 in response to the occurrence of the schedule registration event. For example, the first screen 801 and the second screen 802 may include a user interface for schedule registration, and the user interface may be configured to include at least one of a time field, a place field, and/or a schedule content input field for schedule registration. The processor 120 may detect a user input 840 for determining at least one piece of recommendation information 830 on the first screen 801, and display the second screen 802 in response to detection of the user input 840. For example, the second screen 802 may include a user interface in which recommendation data 831 included in at least one piece of recommendation information 830 is input. The processor 120 may display a period information list 851 for selecting at least one piece of period information (e.g., deadline information) determined based on the recommendation data 831 on the time field 850 included in the second screen 802. According to an embodiment, the electronic device 101 may input the recommendation data 831 included in the recommendation information 830 into the time field 850 of the user interface in response to the user's input 840 for the recommendation information 830. According to an embodiment, the electronic device 101 may provide the user with at least one piece of recommendation information 830 for schedule registration, and register a schedule (e.g., Buy milk today) corresponding to the recommendation information 830 in response to one touch input.

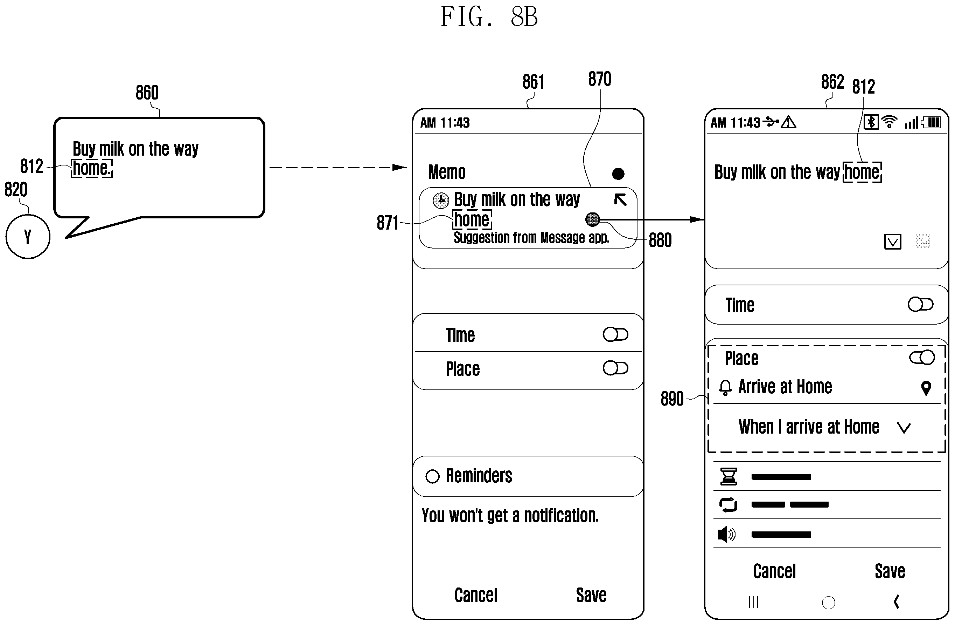

FIG. 8B is an exemplary diagram illustrating a second embodiment of providing recommendation information including specific content based on place information included in schedule-related information according to various embodiments of the disclosure.

The electronic device (e.g., the electronic device 101 of FIG. 1) of FIG. 8B may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and/or at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. When receiving at least one piece of content 230 from the external electronic device 220, the electronic device 101 may identify whether the application that transmitted the content 230 is an information-sharing application. For example, the information-sharing application may include an application in which information sharing (e.g., sharing schedule-related information) is allowed to the schedule-related application by user configuration. When the application that has transmitted at least one piece of content 230 corresponds to an information-sharing application, the electronic device 101 may extract schedule-related information (e.g., schedule-related information 320) included in at least one piece of content 230, and provide at least one piece of recommendation information to a user based on the extracted schedule-related information 320.

Referring to FIG. 8B, a processor (e.g., the processor 120 of FIG. 1) of the electronic device 101 may acquire a message 860 from the external electronic device 210 (e.g., the user 820 of the external electronic device 210). For example, the message 860 is composed based on text and may include schedule-related information 320 (e.g., place information 812).

According to an embodiment, after acquiring the message 860, the electronic device 101 may identify whether an application (e.g., a message application, a chat application) corresponding to the message 860 is an information-sharing application, and extract schedule-related information 320 included in the message 860 when the application is an information-sharing application. The electronic device 101 may execute a schedule-related application, and display at least one piece of recommendation information 870 for schedule registration in response to the execution of the schedule-related application. For example, the processor 120 may execute the schedule-related application in response to a request to execute the schedule-related application, and detect the occurrence of a schedule registration event in the schedule-related application. In response to the occurrence of the schedule registration event, the processor 120 may display recommendation information 870 related to schedule registration through a display module (e.g., the display module 160 of FIG. 1). For example, the recommendation information 870 may be generated based on the schedule-related information 320 (e.g., place information 812 (e.g., "home")) included in the message 860. According to an embodiment, the processor 120 may determine recommendation information 870 for schedule registration based on schedule content (e.g., Buy Milk on the way home), and provide the recommendation information 870 to the user. The recommendation information 870 may include at least one of the name 820 (e.g., identification (ID), Y) of the counterpart who transmitted the message 860, recommendation data 871 determined based on the place information 812, and/or application program information (e.g., a message app) corresponding to the message 860.

Referring to FIG. 8B, the processor 120 may display a first screen 861 including at least one piece of recommendation information 870 in response to the occurrence of the schedule registration event. For example, the first screen 861 and the second screen 862 may include a user interface for schedule registration, and the user interface may be configured to include at least one of a time field, a place field, and/or a schedule content input field for schedule registration. The processor 120 may detect a user input 880 for determining at least one piece of recommendation information 870 on the first screen 861, and display the second screen 862 in response to detection of the user input 880. For example, the second screen 862 may include a user interface in which recommendation data 871 included in at least one piece of recommendation information 870 is input. The processor 120 may input the recommendation data 871 into the time field and the place field 890 included in the second screen 862. For example, the processor 120 may determine at least one place where the recommendation data 871 is provided based on the recommendation data 871, and register a schedule to provide a notification according to a time point located in the determined place. According to an embodiment, in response to the user's input 880 for the recommendation information 870, the electronic device 101 may input a place for providing a notification of the recommendation data 871 included in the recommendation information 870 into the place field 890. According to an embodiment, the electronic device 101 may provide the user with at least one piece of recommendation information for schedule registration, and register a schedule corresponding to the recommendation information in response to one touch input.

According to an embodiment, the user's convenience for registering a schedule may be improved.

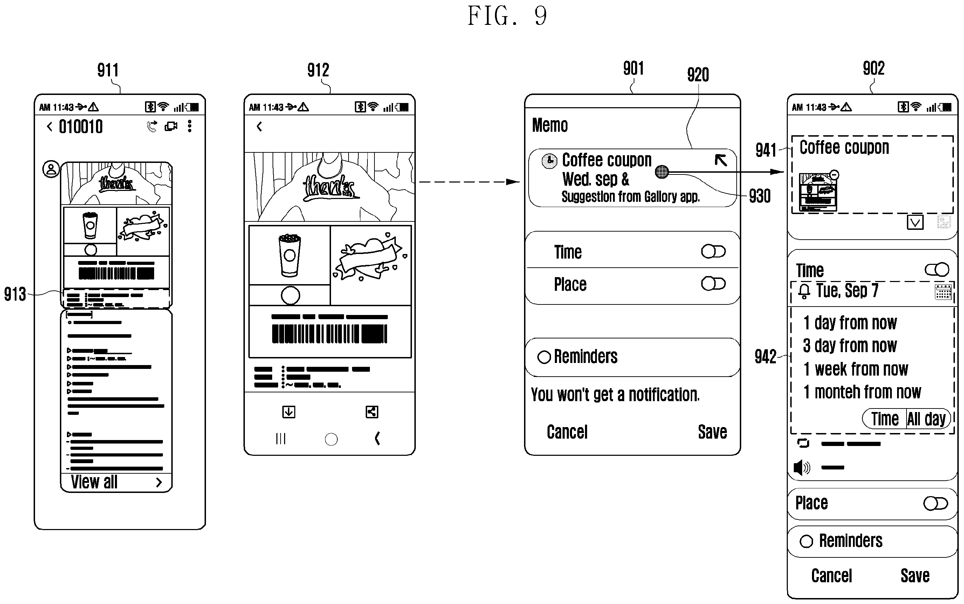

FIG. 9 is an exemplary diagram illustrating an embodiment of providing recommendation information based on schedule-related information included in the image when the acquired content according to various embodiments of the disclosure is an image.

According to an embodiment, the electronic device 101 may perform wireless communication with an external electronic device (e.g., the external electronic device 220 of FIG. 2) and transmit and receive at least one piece of content (e.g., a message, an image, a file, and/or at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. The electronic device 101 may extract schedule-related information (e.g., schedule-related information 320) included in at least one piece of content 230, and provide at least one piece of recommendation information to a user based on the extracted schedule-related information 320.

Referring to FIG. 9, the processor (e.g., the processor 120 of FIG. 1) of the electronic device 101 may acquire a message 911 including an image from the external electronic device 210 or an image 912 (e.g., a coupon image). For example, the message 911 including an image may include schedule-related information 320 (e.g., the expiration date 913 of a coupon). According to an embodiment, in response to receiving the image, the processor 120 may extract text included in the image (e.g., the expiration date 913 of a coupon), and determine schedule-related information 320 based on the extracted text. For example, when a certain period is included in the extracted text, the processor 120 may identify that the image is valid until the certain period, and determine the certain period as the schedule-related information 320. For example, when the extracted text includes place information (e.g., company name, store name, address, and area name), the processor 120 may identify that the image is available in the corresponding place information and determine the place information as schedule-related information 320.

Referring to FIG. 9, the processor 120 may display a first screen 901 including at least one piece of recommendation information 920 in response to the occurrence of the schedule registration event. For example, the first screen 901 and the second screen 902 may include a user interface for schedule registration, and the user interface may be configured to include at least one of a time field, a place field, and/or a schedule content input field for schedule registration. The processor 120 may detect a user input 930 for determining at least one piece of recommendation information 920 on the first screen 861, and display the second screen 902 in response to detection of the user input 930. For example, the second screen 902 may include a user interface in which recommendation data (e.g., schedule content 941) included in at least one piece of recommendation information 920 is input. The processor 120 may input time information 942 included in the recommendation information 920 into the time field 942 included in the second screen 902. According to an embodiment, the electronic device 101 may at least partially input recommendation data (e.g., schedule content 941 and/or time information 942) included in the recommendation information 920 to the user interface in response to the user's input 930 for the recommendation information 920. For example, the processor 120 may input the schedule content 941 into an input field for inputting the schedule content, and input the time information 942 into the time field. The processor 120 may display at least one piece of time information 942 in the form of a list, and may determine one piece of time information 942 in response to a user input.

According to an embodiment, the electronic device 101 may provide the user with at least one piece of recommendation information 920 for schedule registration, and register a schedule corresponding to the recommendation information 920 in response to one touch input.

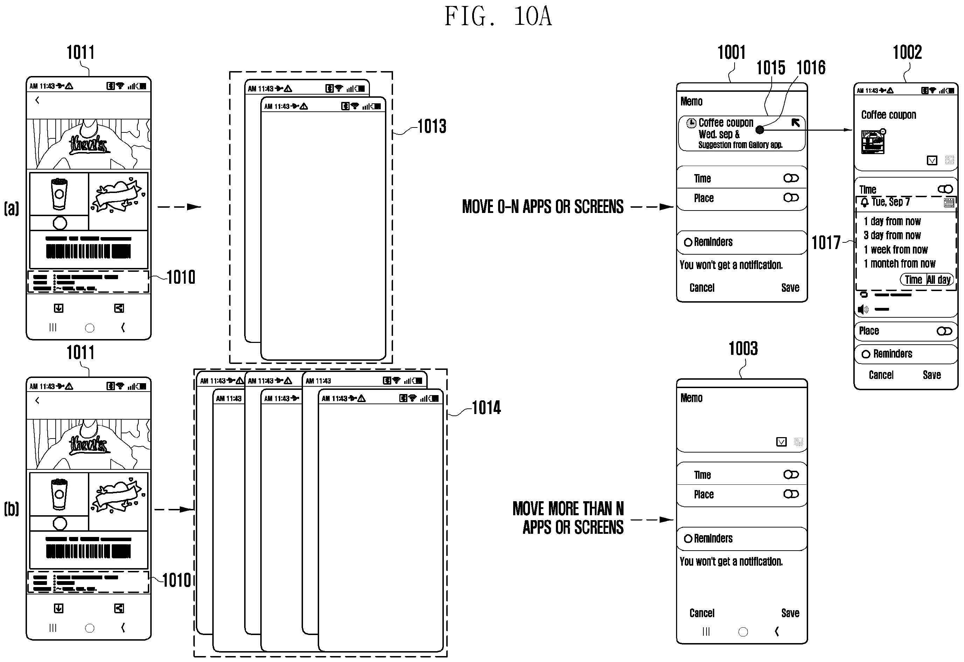

FIG. 10A is an exemplary diagram illustrating an embodiment of providing recommendation information when the number of displayed pages is less than or equal to a configured threshold value based on the time when schedule-related information is extracted according to various embodiments of the disclosure.

The electronic device (e.g., the electronic device 101 of FIG. 1) of FIG. 10A may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and/or at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. The electronic device 101 may extract schedule-related information (e.g., schedule-related information 320) included in at least one piece of content 230, and provide at least one piece of recommendation information to a user based on the extracted schedule-related information 320.

Referring to FIG. 10A, the processor (e.g., the processor 120 of FIG. 1) of the electronic device 101 may extract at least one piece of schedule-related information 320 based on the content 230 acquired from the external electronic device 210, and maintain the extracted at least one piece of schedule-related information 320 under a configured condition. For example, the processor 120 may store at least one piece of schedule-related information 320 in a memory (e.g., the memory 130 of FIG. 1, a temporary storage medium (e.g., a buffer)), and maintain a state in which the schedule-related information 320 is stored in the memory 130 according to a configured condition. For example, the configured condition may include a first condition in which the schedule-related application is executed within a configured time after the schedule-related information 320 is extracted. Alternatively, the configured condition may include a second condition in which the number of threads occurring after the schedule-related information 320 is extracted is within a configured threshold value. When at least one of the first condition and/or the second condition is satisfied, the processor 120 may maintain a storage state of the schedule-related information 320 in the memory 130. For example, when the configured condition is not satisfied, the processor 120 may delete the schedule-related information 320 stored in the memory 130. When the schedule-related information 320 is deleted, the processor 120 may not generate recommendation information based on the schedule-related information 320, and it may be difficult to provide recommendation information to the user.

Referring to FIG. 10A, the processor 120 may acquire an image (e.g., a coupon) from the external electronic device 210 and display the image through a display module (e.g., the display module 160 of FIG. 1). For example, the processor 120 may extract schedule-related information (e.g., the expiration date 1010 of a coupon) included in the image, and temporarily store the extracted schedule-related information in the memory 130. The processor 120 may identify the number of threads 1013 and 1014 that occur after the extraction time point of the schedule-related information. For example, the thread may refer to a unit in which a process is executed in a program installed in the electronic device 101. For example, when another function is performed in the first program (e.g., a schedule-related application) or the screen is changed, the number of threads may increase. Even when the second program other than the first program is executed and a function for the second program is performed, the number of threads may increase.

The processor 120 may configure a first threshold value corresponding to the number of threads, and when the number of threads that have occurred is within the first threshold value based on the extraction time point of the schedule-related information, the extracted schedule-related information may be maintained in the memory 130. In the case of (a), when the number of threads 1013 occurred after the expiration date 1010 of the coupon (e.g., schedule-related information) is extracted is within the first threshold value, the processor 120 may display the first screen 1001 including at least one piece of recommendation information 1015. The processor 120 may detect a user input 1016 for determining at least one piece of recommendation information 1015 on the first screen 1001, and display the second screen 1002 in response to detection of the user input 1016. For example, the second screen 1002 may be a user interface including recommendation data 1017 corresponding to at least one piece of recommendation information 1015. In the case of (b), when the number of threads 1014 exceeds the first threshold value after the expiration date 1010 of the coupon (e.g., schedule-related information) is extracted, the processor 120 may display the third screen 1003 in which recommendation information is not included. The processor 120 may not provide the recommendation information to the user. For example, when the number of occurrences of the thread 1014 exceeds the first threshold value, the processor 120 may delete the schedule-related information stored in the memory 130 and may not generate recommendation information based on the schedule-related information.

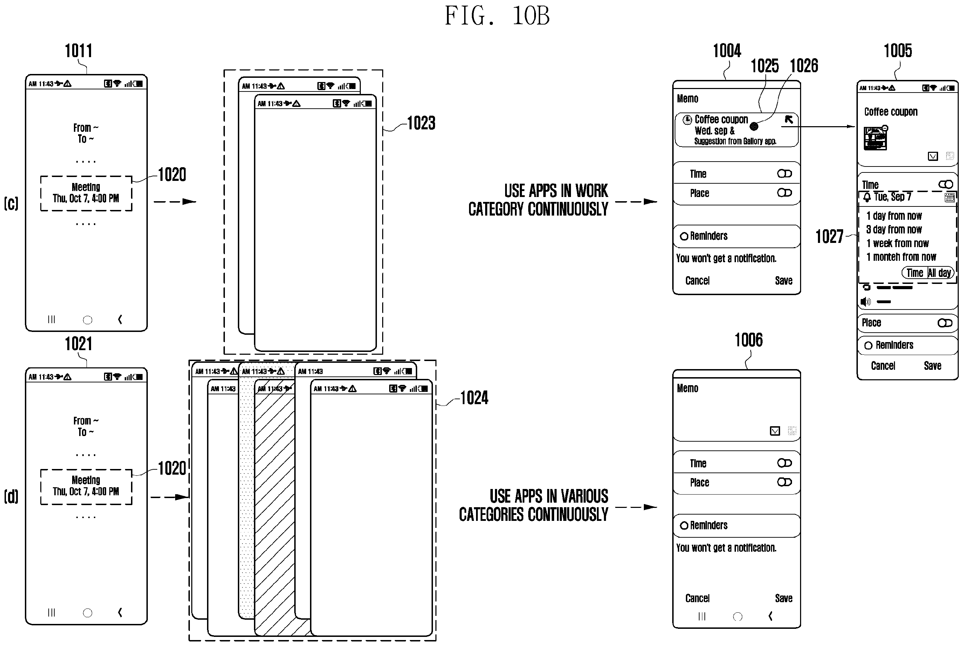

FIG. 10B is an exemplary diagram illustrating an embodiment of providing recommendation information when a schedule-related app is used based on the time when schedule-related information is extracted according to various embodiments of the disclosure.

The electronic device (e.g., the electronic device 101 of FIG. 1) of FIG. 10B may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and/or at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. The electronic device 101 may extract schedule-related information (e.g., schedule-related information 320) included in at least one piece of content 230, and provide at least one piece of recommendation information to a user based on the extracted schedule-related information 320.

Referring to FIG. 10B, the processor (e.g., the processor 120 of FIG. 1) of the electronic device 101 may extract at least one piece of schedule-related information 320 based on the content 230 acquired from the external electronic device 210, and maintain the extracted at least one piece of schedule-related information 320 under a configured condition. For example, the processor 120 may store at least one piece of schedule-related information 320 in a memory (e.g., the memory 130 of FIG. 1, a temporary storage medium (e.g., a buffer)), and maintain a state in which the schedule-related information 320 is stored in the memory 130 according to a configured condition. For example, the configured condition may include whether an application related to the category of the acquired content 230 has been executed after the schedule-related information 320 is extracted. For example, the configured condition may include a first condition in which only an application related to the acquired content 230 is executed and a second condition in which an application for various types of categories is executed.

Referring to FIG. 10B, the processor 120 may acquire at least one message 1021 from the external electronic device 210 and display the at least one message 1021 through a display module (e.g., the display module 160 of FIG. 1). For example, the processor 120 may extract schedule-related information (e.g., meeting schedule information 1020) included in the message, and temporarily store the extracted schedule-related information in the memory 130. The processor 120 may identify the types of threads 1023 and 1024 that occur after the extraction time point of the schedule-related information.

In the case of (c), when the occurred thread 1023 corresponds to a work category related to a message after the meeting schedule information 1020 is extracted, the processor 120 may maintain the meeting schedule information 1020 in the memory 130. In the case of (c), the processor 120 may display the fourth screen 1004 including the meeting schedule information 1020. The processor 120 may detect a user input 1026 for determining at least one piece of recommendation information 1025 on the fourth screen 1004, and display the fifth screen 1005 in response to detection of the user input 1026. For example, the fifth screen 1005 may be a user interface including recommendation data 1027 corresponding to at least one piece of recommendation information 1025.

In the case of (d), when the occurred thread 1024 is an application for various types of categories after the meeting schedule information 1020 is extracted, the processor 120 may display the sixth screen 1006 in which recommendation information is not included. The processor 120 may not provide the recommendation information to the user. For example, when the category for the thread 1024 is not related to the meeting schedule information 1020, the processor 120 may delete the meeting schedule information 1020 stored in the memory 130 and may not generate recommendation information based on the meeting schedule information 1020.

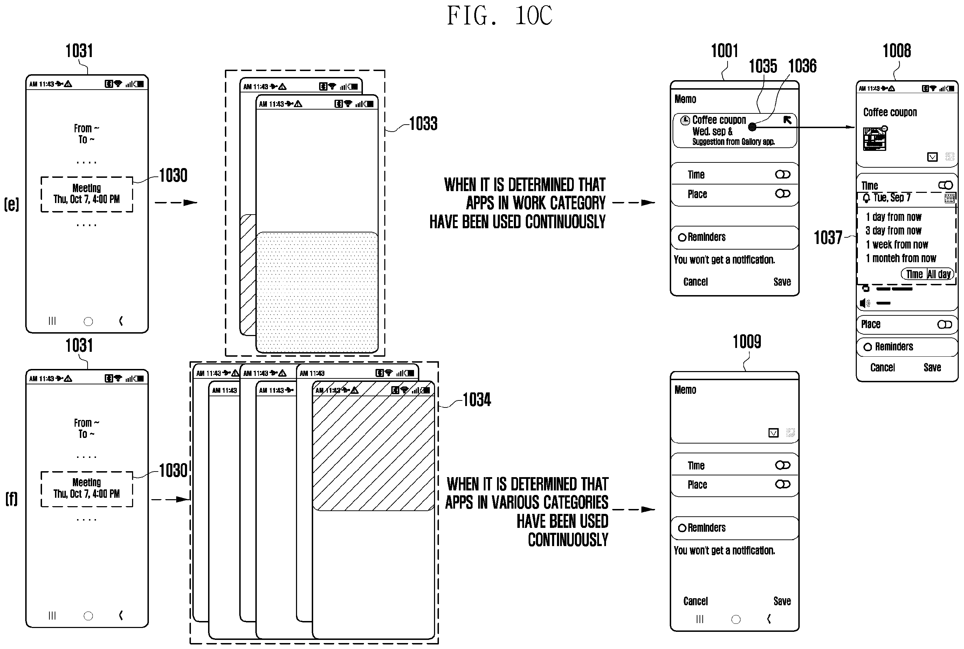

FIG. 10C is an exemplary diagram illustrating an embodiment of providing recommendation information when a schedule-related app is continuously used based on the time when schedule-related information is extracted according to various embodiments of the disclosure.

The electronic device (e.g., the electronic device 101 of FIG. 1) of FIG. 10C may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and/or at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. The electronic device 101 may extract schedule-related information (e.g., schedule-related information 320) included in at least one piece of content 230, and provide at least one piece of recommendation information to a user based on the extracted schedule-related information 320.

Referring to FIG. 10C, the processor (e.g., the processor 120 of FIG. 1) of the electronic device 101 may extract at least one piece of schedule-related information 320 based on the content 230 acquired from the external electronic device 210, and maintain the extracted at least one piece of schedule-related information 320 under a configured condition. For example, the processor 120 may store at least one piece of schedule-related information 320 in a memory (e.g., the memory 130 of FIG. 1, a temporary storage medium (e.g., a buffer)), and maintain a state in which the schedule-related information 320 is stored in the memory 130 according to a configured condition. For example, the configured condition may include whether an application related to the category of the acquired content 230 has been executed after the schedule-related information 320 is extracted. According to an embodiment, the electronic device 101 may include a plurality of processors and perform multi-processing. For example, the configured condition may include a first condition in which at least one processor maintains performing an application related to the category of the acquired content 230 and a second condition in which no processor maintains performing an application related to the category of the acquired content 230.

Referring to FIG. 10C, the processor 120 may acquire at least one message 1031 from the external electronic device 210 and display the at least one message 1031 through a display module (e.g., the display module 160 of FIG. 1). For example, the processor 120 may extract schedule-related information (e.g., meeting schedule information 1030) included in the message, and temporarily store the extracted schedule-related information in the memory 130. The processor 120 may identify the types of threads 1033 and 1034 that occur after the extraction time point of the schedule-related information in a multi-processing state based on a plurality of processors.

In the case of (e), when the occurred thread 1033 corresponds to a work category related to a message after the meeting schedule information 1030 is extracted, the processor 120 may maintain the meeting schedule information 1030 in the memory 130. For example, (e) may be a state in which at least one processor continuously performs thread 1033 of a work category. In the case of (e), the processor 120 may display the seventh screen 1007 including the meeting schedule information 1030. The processor 120 may detect a user input 1036 for determining at least one piece of recommendation information 1035 on the seventh screen 1007, and display the eighth screen 1008 in response to detection of the user input 1036. For example, the eighth screen 1008 may be a user interface including recommendation data 1037 corresponding to at least one piece of recommendation information 1035.

In the case of (f), when the occurred thread 1034 corresponds to various types of categories other than the work category, not related to the message after the meeting schedule information 1030 is extracted, the processor 120 may display the nineth screen 1009 in which recommendation information is not included. For example, when the category for the thread 1034 is not related to the work category, the processor 120 may delete the meeting schedule information 1030 stored in the memory 130 and may not generate recommendation information based on the meeting schedule information 1030.

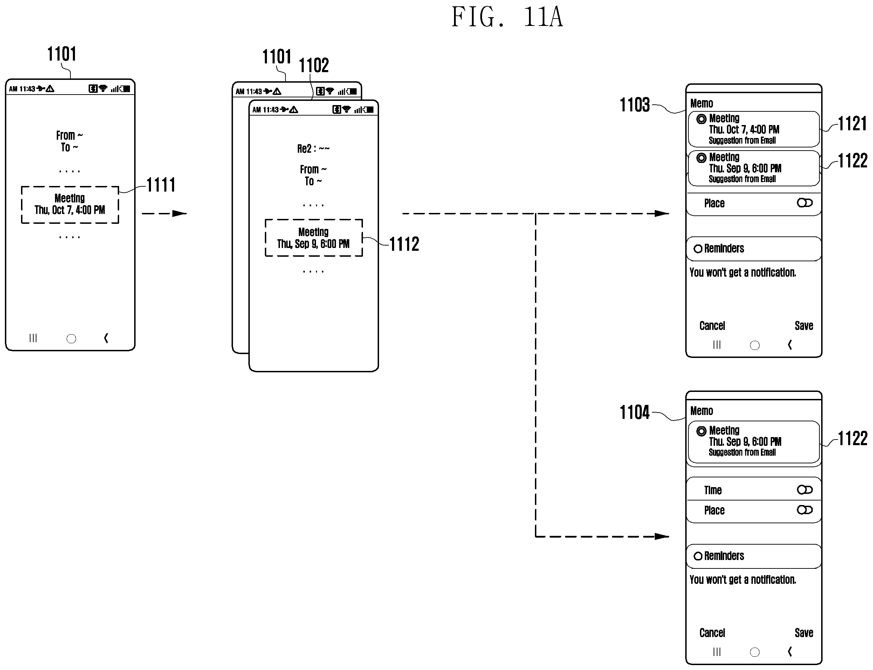

FIG. 11A is an exemplary diagram illustrating an embodiment of providing a plurality of recommendation information or selectively providing one piece of recommendation information when a plurality of schedule-related information is extracted according to various embodiments of the disclosure.

The electronic device (e.g., the electronic device 101 of FIG. 1) of FIG. 11A may be at least partially similar to the electronic device 210 of FIG. 2, or may further include other embodiments of the electronic device 101.

According to an embodiment, the electronic device 101 may perform wireless communication with an external electronic device (e.g., the external electronic device 220 of FIG. 2) and transmit and receive at least one piece of content (e.g., a message, an image, a file, and/or at least one piece of content 230 of FIG. 2) to and from each other. For example, the electronic device 101 may acquire at least one piece of content 230 from the external electronic device 220. According to another embodiment, the electronic device 101 may generate at least one piece of content or download at least one piece of content. The electronic device 101 may extract schedule-related information (e.g., schedule-related information 320) included in at least one piece of content 230, and provide at least one piece of recommendation information to a user based on the extracted schedule-related information 320.

Referring to FIG. 11A, the processor (e.g., the processor 120 of FIG. 1) of the electronic device 101 may extract schedule-related information 1111 (e.g., meeting time information) included in the message based on the message acquired from the external electronic device 210, and temporarily store the extracted schedule-related information in the memory 130.

Referring to FIG. 11A, the processor 120 may acquire a plurality of messages from the external electronic device 210 through a message application, and may display a first screen 1101 for the first message and a second screen 1102 for the second message. The processor 120 may extract a plurality of messages and schedule-related information (e.g., first schedule-related information 1111 and second schedule-related information 1112). For example, the processor 120 may generate first recommendation information 1121 based on the first schedule-related information 1111, and generate second recommendation information 1122 based on the second schedule-related information 1112. The processor 120 may display the third screen 1103 including a plurality of recommendation information. For example, the first recommendation information 1121 and the second recommendation information 1122 may be arranged and displayed in a list form. The processor 120 may identify the priority of each recommendation information based on the user's usage pattern information stored in the memory 130, and determine a display position of the recommendation information according to the identified priority. For example, recommendation information with relatively high priority may be placed at the top of the list. For another example, the processor 120 may select one piece of recommendation information (e.g., the second recommendation information 1122) from among a plurality of recommendation information based on the user's usage pattern information, and display the fourth screen 1104 including the selected second recommendation information 1122.

According to an embodiment, the processor 120 may determine that the most recently extracted schedule-related information has the highest priority based on the registration time point of the schedule. When displaying a plurality of recommendation information in the form of a list, the processor 120 may select the schedule-related information having the highest priority, and display the recommendation information generated based on the selected schedule-related information to be placed at the top of the list. According to an embodiment, the recommendation information with relatively high priority may be visually displayed to be distinguished from the rest of the recommendation information, or may be displayed by reflecting an emphasis effect (e.g., a highlight effect). The processor 120 may configure and display at least one of color, size, font, and/or shadow effect differently to distinguish high-priority recommendation information from the rest of the recommendation information.

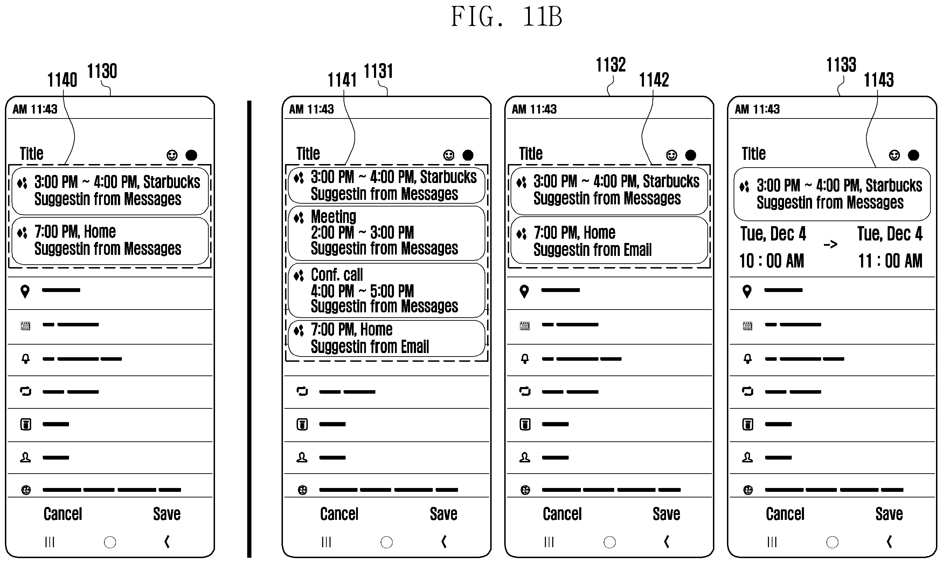

FIG. 11B is an exemplary diagram illustrating an embodiment of providing a plurality of recommendation information or selectively providing one piece of recommendation information in more detail than FIG. 11A when a plurality of schedule-related information is extracted according to various embodiments of the disclosure.

The electronic device (e.g., the electronic device 101 of FIG. 1) of FIG. 11B may be at least partially similar to the electronic device 210 of FIG. 2, or may further include other embodiments of the electronic device 101.

Referring to FIG. 11B, the processor (e.g., the processor 120 of FIG. 1) of the electronic device 101 may acquire a plurality of messages from the external electronic device 210 through a message application, and generate recommendation information based on the acquired plurality of messages. FIG. 11B illustrates various embodiments in which at least one piece of recommendation information is displayed in the electronic device 101.

For example, when receiving a plurality of messages through the same message application, the processor 120 may generate at least one piece of recommendation information 1140 based on the plurality of messages, and display the screen 1130 including the recommendation information 1140. The processor 120 may display the recommendation information 1140 in the form of a list, and determine the display position so that recommendation information with relatively high priority is placed at the top. According to an embodiment, the processor 120 may determine the priority of the recommendation information based on the user's usage pattern information (e.g., usage history), and place the high-priority recommendation information at the top of the list.

For another example, when receiving a plurality of messages through various applications, the processor 120 may generate a first recommendation list 1141 based on the plurality of messages, and display the first screen 1131 including the first recommendation list 1141. The processor 120 may extract schedule-related information related to work based on various types of applications, and display a plurality of recommendation information generated based on the extracted schedule-related information. The processor 120 may determine the priority of the recommendation information based on the user's usage pattern information (e.g., usage history), and place the high-priority recommendation information at the top of the list.

For another example, when receiving a plurality of messages through various applications, the processor 120 may generate one piece of recommendation information for each application, and display the second recommendation list 1142 including the generated recommendation information on the second screen 1132. The processor 120 may select recommendation information corresponding to each application based on the user's usage pattern information (e.g., usage history), and display the selected recommendation information in the form of a list. According to another embodiment, the processor 120 may determine an application with relatively high priority based on various applications, and may determine that recommendation information for the application having a high priority is placed at the top of the list.

For another example, when receiving a plurality of messages through various applications, the processor 120 may generate one piece of recommendation information with relatively highest priority, and display the third recommendation list 1143 including the generated recommendation information on the third screen 1133. The processor 120 may select recommendation information with relatively highest priority based on the user's usage pattern information (e.g., usage history), and display one selected recommendation information.

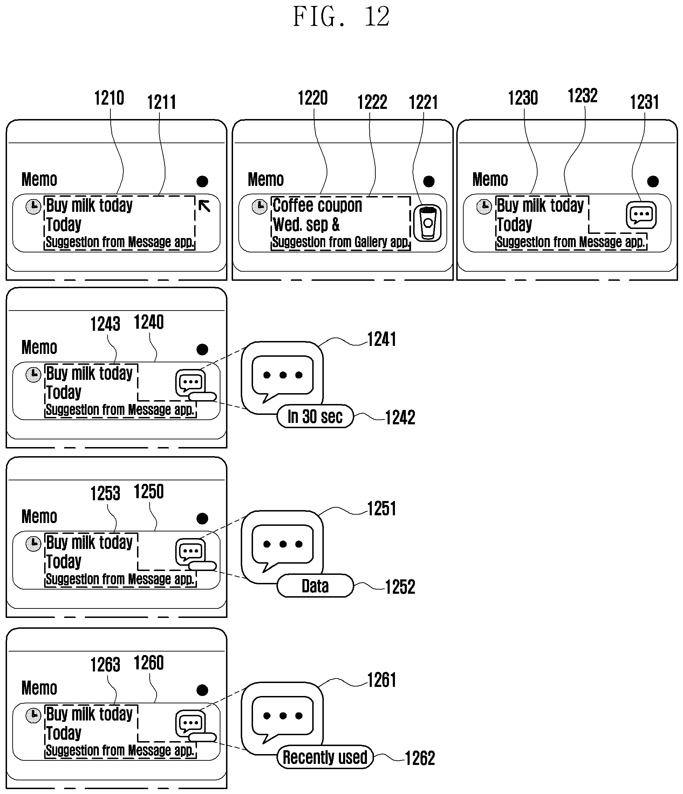

FIG. 12 is an exemplary diagram illustrating a display form of recommendation information according to an embodiment of the disclosure.

The electronic device (e.g., the electronic device 101 of FIG. 1) of FIG. 12 may be at least partially similar to the electronic device 210 of FIG. 2, or may further include other embodiments of the electronic device 101.

Referring to FIG. 12, the processor (e.g., the processor 120 of FIG. 1) of the electronic device 101 may generate and display recommendation information in various forms. Referring to FIG. 12, six types of recommendation information are illustrated, but are not limited thereto. The recommendation information illustrated in FIG. 12 may be implemented in a form that includes a plurality of recommendation information.

The first form 1210 may include recommendation information 1211 including application information (e.g., a message app) on the acquired content (e.g., a message) and schedule-related information (e.g., time information, today) included in the acquired content.

The second form 1220 may include recommendation information 1222 including application information (e.g., a gallery app) on the acquired content (e.g., an image) and schedule-related information (e.g., the expiration date of a coupon, Wed., Sep.) included in the content, and/or icon information 1221 corresponding to the content.

The third form 1230 may include recommendation information 1232 including application information (e.g., a message app) on the acquired content (e.g., a message) and schedule-related information (e.g., time information, today) included in the content, and/or icon information 1231 corresponding to the application.

The fourth form 1240 may include recommendation information 1243 including application information (e.g., a message app) on the acquired content (e.g., a message) and schedule-related information (e.g., time information, today) included in the content, icon information 1241 corresponding to the application, and/or configuration condition 1242 for recommendation information.

The fifth form 1250 may include recommendation information 1253 including application information (e.g., a message app) on the acquired content (e.g., a message) and schedule-related information (e.g., time information, today) included in the content, icon information 1251 corresponding to the application, and/or information 1252 on the type of recommendation information (e.g., category information, data).

The sixth form 1260 may include recommendation information 1263 including application information (e.g., a message app) on the acquired content (e.g., a message) and schedule-related information (e.g., time information, today) included in the content, icon information 1261 corresponding to the application, and/or selection conditions for recommendation information 1262 (e.g., recently used).

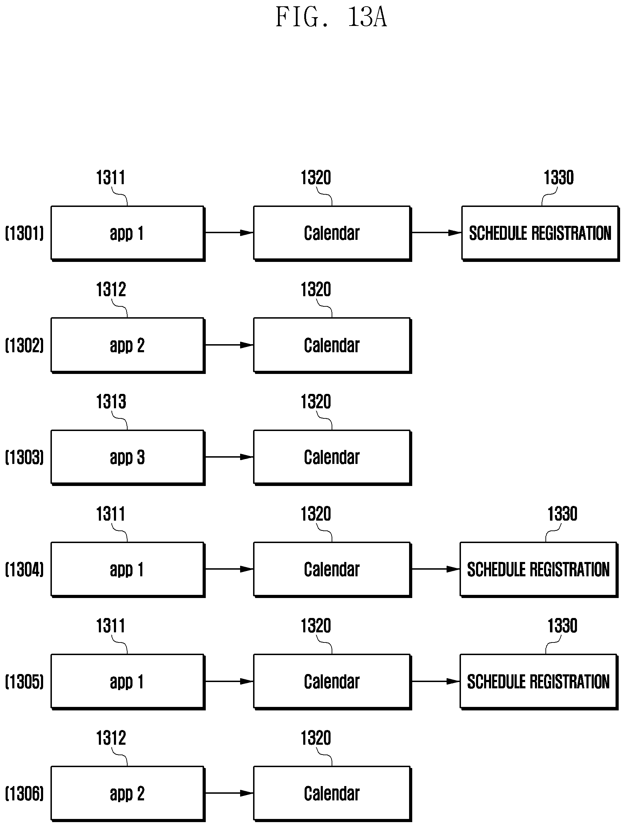

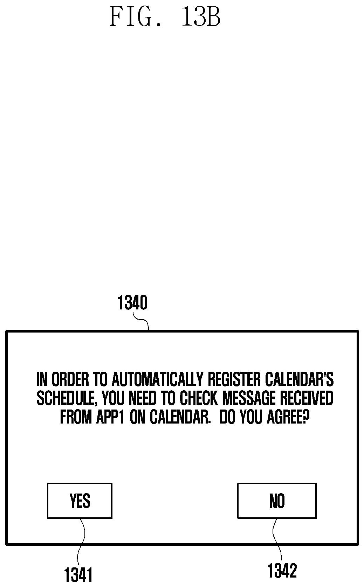

FIG. 13A is an exemplary diagram illustrating a method of configuring an information-sharing application according to an embodiment of the disclosure. FIG. 13B is an exemplary diagram illustrating a notification message for configuring an information-sharing application according to an embodiment of the disclosure.

The electronic device (e.g., the electronic device 101 of FIG. 1) of FIGS. 13A and 13B may be at least partially similar to the electronic device 210 of FIG. 2, or may further include other embodiments of the electronic device 101.

According to an embodiment, the processor (e.g., the processor 120 of FIG. 1) of the electronic device 101 may receive at least one piece of content (e.g., a message, an image, and/or a file), execute a schedule-related application (e.g., a calendar application) to register information included in at least one piece of content (e.g., schedule-related information 320 of FIG. 3) as a schedule, and register the schedule based on the schedule-related application. The processor 120 may analyze the user's usage pattern in relation to schedule registration, and give a score to an application in which a specific usage pattern is satisfied. When the score given to the application exceeds the configured first threshold score, the processor 120 may configure the corresponding application as an information-sharing application (e.g., the information-sharing application 311 of FIG. 3) and store the same in a memory (e.g., the memory 130 of FIG. 3).

Referring to FIG. 13A, the six illustrated operations may be sequentially generated operations, and all may include an operation in which at least one piece of content is received. For example, operation 1301 may include an operation in which first content is received through an app1 1311 and a schedule-related application (e.g., a calendar application, a calendar app 1320) is executed to register the schedule (1330). Operation 1302 may include an operation in which second content is received through an app2 1312 and the calendar app 1320 is executed. Operation 1303 may include an operation in which third content is received through an app3 1313 and the calendar app 1320 is executed. Operation 1302 and operation 1303 may be operations in which a schedule is not registered. Operation 1304 and operation 1305 may be substantially the same operation. For example, operation 1304 may include an operation in which fourth content is received through the app1 1311 and the calendar app 1320 is executed to register the schedule (1330), and operation 1305 may include an operation in which fifth content is received through the app1 1311 and the calendar app 1320 is executed to register the schedule (1330). Operation 1306 may include an operation in which sixth content is received through the app2 1312 and the calendar app 1320 is executed.

Referring to FIG. 13A, when it is identified that a specific application is highly related to schedule registration, the electronic device 101 may give a score to the specific application to store the specific application in the information-sharing application 311. For example, the processor 120 may select operation 1301, operation 1304, and operation 1305 for which registration of the schedule 1330 is also completed after at least one piece of content is received, and may give a first score to the app1 1311 in operation 1301, operation 1304, and operation 1305. For example, in response to the execution of the calendar app 1320, the processor 120 may give the app1 1311 a second score when a screen change (e.g., foreground change, pop-up change) occurs to the app1 1311 screen while the calendar app 1320 screen is being displayed through the display module 160. For example, when the app1 1311 screen is displayed for a predetermined time (e.g., about 2 seconds) after the screen switch to the app1 1311 occurs, and then a switch back to the calendar app 1320 screen, the processor 120 may give the app1 1311 a third score. For example, when the app1 1311 screen and the calendar app 1320 screen are displayed together score by using the multi-window function, the processor 120 may give the app1 1311 a fourth score. According to an embodiment, the electronic device 101 may give a score to an application (e.g., the app1 1311) that is highly related to schedule registration, and configure and store the application (e.g., the app1 1311) as the information-sharing application 311 when the accumulated score exceeds the configured first threshold score (e.g., about 10 points). According to an embodiment, the electronic device 101 may give a score to each of the applications stored in the memory 130, and store the given score in response to a situation in which the power is turned on or off.

Referring to FIG. 13B, the electronic device 101 may display a notification message 1340 for configuration to the information-sharing application 311 through the display module 160. For example, when the score given to a specific application (e.g., app1 1311) exceeds the configured first threshold score, the processor 120 may display a notification message 1340 for configuration to the information-sharing application 1311, and configure and store the specific application as the information-sharing application 1311 by a user's selection (e.g., "Yes 1341" and "No 1342").

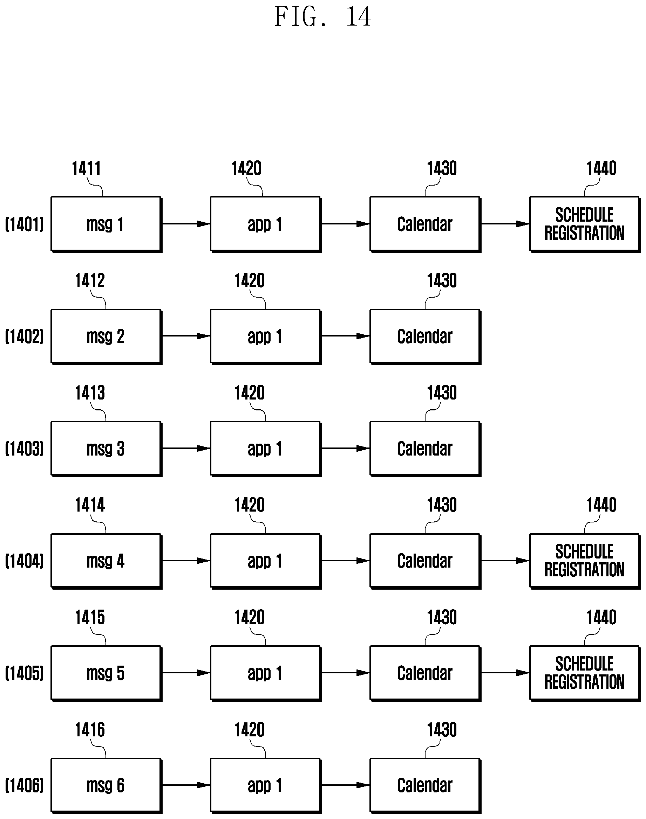

FIG. 14 is an exemplary diagram illustrating a method of storing usage pattern information according to an embodiment of the disclosure.

The electronic device (e.g., the electronic device 101 of FIG. 1) of FIG. 14 may be at least partially similar to the electronic device 210 of FIG. 2, or may further include other embodiments of the electronic device 101.

According to an embodiment, the processor (e.g., the processor 120 of FIG. 1) of the electronic device 101 may receive at least one piece of content (e.g., a message, an image, and/or a file), execute a schedule-related application (e.g., a calendar application) to register information included in at least one piece of content (e.g., schedule-related information 320 of FIG. 3) as a schedule, and register the schedule based on the schedule-related application. The processor 120 may analyze phrases and words included in at least one piece of content in relation to schedule registration, and may give a score to the analyzed phrases and words. When the score given to the phrases and words exceeds the configured second threshold score, the processor 120 may store the corresponding phrases and words as usage pattern information.

Referring to FIG. 14, the six illustrated operations may include an operation in which at least one piece of content (e.g., msg1 1411), msg2 1412, msg3 1413, msg4 1414, msg5 1415, and msg6(1416) is received based on an app1 1420 included in an information-sharing application (e.g., the information-sharing application 311 of FIG. 3). For example, operation 1401 may include an operation in which a first message (e.g., msg1 1411) is received and a schedule-related application (e.g., a calendar application, a calendar app 1430) is executed to register the schedule (1440), based on the app1 1420 included in the information-sharing application 311. Operation 1402 may include an operation in which a second message (e.g., msg2 1412) is received, and the calendar app 1430 is executed based on the app1 1420. Operation 1403 may include an operation in which a third message (e.g., msg3 1413) is received, and the calendar app 1430 is executed based on the app1 1420. Operation 1402 and operation 1403 may be operations in which a schedule is not registered. Operation 1404 may include an operation in which a fourth message (e.g., msg4 1414) is received, and the calendar app 1430 is executed based on the app1 1420, and operation 1405 may include an operation in which a fifth message (e.g., msg5 1415) is received, and the calendar app 1430 is executed based on the app1 1420. Operation 1406 may include an operation in which a sixth message (e.g., msg6 1416) is received, and the calendar app 1430 is executed based on the app1 1420.

Referring to FIG. 14, the electronic device 101 may analyze the received messages (e.g., msg1 1411, msg2 1412, msg3 1413, msg4 1414, msg5 1415, and msg6 1416) through the app1 1420 included in the information-sharing application 311, and extract phrases and words included in the message. The processor 120 may extract phrases and words based on the messages (e.g., msg1 1411, msg4 1414, and msg5 1415) for which the schedule registration 1440 is completed, and give a score to the extracted word. For example, when words included in msg1 1411 are W1, W2, and W3, words included in msg4 1414 are W1, W2, and W7, and words included in msg5 1415 are W1, W3, and W10, the processor 120 may give each word a score of about one point. For example, when the schedule registration 1440 is completed, the processor 120 may accumulate scores corresponding to the words included in the received messages, and store the word and the score of the word in the memory 130 as usage pattern information, as illustrated in Table 2 below.

**[Table 2]**

| Word | Score |
|---|---|
| W1 | 3 |
| W2 | 2 |
| W3 | 2 |
| W7 | 1 |
| W10 | 1 |

According to an embodiment, the processor 120 may identify whether the words stored in the memory 130 and the score corresponding to each of the words exceed a configured second threshold score (e.g., about 3 points). For example, when the score of the specific word exceeds the second threshold score, the processor 120 may generate recommendation information (e.g., recommendation information 312 of FIG. 3) including the specific word in response to execution of a schedule-related application (e.g., a calendar application), and display the generated recommendation information 312. For example, the processor 120 may display the first recommendation information including the first word and the second recommendation information including the second word in the form of a list in response to a situation in which the score of each of the plurality of words (e.g., the first word and the second word) exceeds the second threshold score. The processor 120 may store the generated recommendation information 312 in the memory 130.

According to an embodiment, the electronic device 101 may manage specific words stored in the memory 130. For example, if a word utilized as recommendation information is no longer used as recommendation information for a configured period of time, the electronic device 101 may delete the corresponding word from the memory 130. According to an embodiment, the electronic device 101 may identify words that are highly related to schedule registration based on usage pattern information, and generate recommendation information based on the identified words.

A method of displaying recommendation information, according to various embodiments may include identifying whether an application corresponding to the at least one piece of content is an information-sharing application in response to reception of at least one piece of content (e.g., at least one piece of content 230 of FIG. 2), extracting schedule-related information (e.g., schedule-related information 320 of FIG. 3) based on the received at least one piece of content when the application is the information-sharing application, generating at least one piece of recommendation information (e.g., recommendation information 312 of FIG. 3) based on the extracted schedule-related information 320 in response to execution of a schedule-related application, and displaying the generated at least one piece of recommendation information 312.

A method according to an embodiment may further include receiving first content based on a first application, executing the schedule-related application within a configured time in response to reception of the first content, and configuring the first application as the information-sharing application when a schedule is registered based on the received first content.

A method according to an embodiment may further include giving a first score to the first application based on the first content received through the first application when schedule registration for the schedule-related application is completed, displaying a notification message for configuration as the information-sharing application through the display module 160 when the cumulative score of the first application exceeds a configured first threshold score, and configuring the first application as the information-sharing application in response to a user input for the notification message.

A method according to an embodiment may further include identifying the extracted schedule-related information 320 in response to execution of the schedule-related application, and generating the at least one piece of recommendation information 312 based on usage pattern information and usage history related to the identified schedule-related information 320.

A method according to an embodiment may further include giving a second score to a first phrase when it is identified that the first phrase is registered as a schedule among the schedule-related information 320, and generating the at least one piece of recommendation information 312 based on the first phrase when the cumulative score of the first phrase exceeds a configured second threshold score.

According to an embodiment, the generating the at least one piece of recommendation information 312 may include executing the schedule-related application for a schedule registration, and generating at least one piece of recommendation information 312 based on the schedule-related information 320 in response to an occurrence of the schedule registration event. The occurrence of the schedule registration event is characterized by detecting a schedule registration instruction for registering at least one schedule while the schedule-related application is being executed.

According to an embodiment, the generating the at least one piece of recommendation information 312 may include storing the extracted schedule-related information 320 in the memory 130, identifying the schedule-related information 320 stored in the memory 130 in response to the execution of the schedule-related application, generating the at least one piece of recommendation information 312 based on the identified schedule-related information 320.

A method according to an embodiment may further include identifying a first time point at which the schedule-related information 320 is extracted and a second time point for generating the at least one piece of recommendation information 312, identifying whether a time interval between the first time point and the second time point is within a configured first threshold value, and generating the at least one piece of recommendation information 312 based on the schedule-related information 320 when the time interval is within the first threshold value.

A method according to an embodiment may further include identifying the number of threads that have occurred between the first time point and the second time point when the time interval exceeds the first threshold value, identifying whether the number of threads is within a configured second threshold value, and generating the at least one piece of recommendation information 312 based on the schedule-related information 320 when the number of threads is within the second threshold value.

A method according to an embodiment may further include identifying whether the thread is substantially occurred in the same session when the number of threads exceeds the second threshold value, and generating the at least one piece of recommendation information 312 based on the schedule-related information 320 when the thread occurs in the same session.

According to an embodiment, the displaying the at least one piece of recommendation information 312 may include identifying a priority corresponding to the generated at least one piece of recommendation information 312, determining a display order for the at least one piece of recommendation information 312 based on the identified priority, and displaying the at least one piece of recommendation information 312 according to the determined display order. It is characterized in that the priority is determined corresponding to the at least one piece of recommendation information 312 based on the usage pattern information stored in the memory 130 and the usage history of the schedule-related application.

According to an embodiment, it is characterized in that the schedule-related information 320 is extracted based on at least one text included in the at least one piece of content 230, and includes at least one of information on a counterpart who performs a schedule, date information 321 on which the schedule is performed, information on a day of the week on which the schedule is performed, time information 322 on the schedule, and place information 323 on the schedule.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display module (160);
a processor (120); and
a memory (130) operatively connected to the display module (160) and the processor (120),
wherein the memory (130) is configured to store instructions that, when executed, cause the processor (120) to:
identify whether an application corresponding to the at least one piece of content is an information-sharing application, in response to reception of at least one piece of content;
extract schedule-related information (320) based on the received at least one piece of content in case that the application is an information-sharing application;
generate at least one piece of recommendation information (312) based on the extracted schedule-related information (320) in response to execution of a schedule-related application; and
display the generated at least one piece of recommendation information (312) through the display module (160).

2. The electronic device of claim 1, wherein the instructions cause the processor (120) to:
store the extracted schedule-related information in the memory (130) as information related to the schedule-related application; and
generate the at least one piece of recommendation information (312) based on the schedule-related information stored in the memory (130) in response to execution of the schedule-related application.

3. The electronic device of claim 1 or 2, wherein the instructions cause the processor (120) to:
receive first content based on a first application;
execute the schedule-related application within a configured time in response to reception of the first content; and
configure the first application as the information-sharing application in case that a schedule is registered based on the received first content.

4. The electronic device of one of claims 1 to 3, wherein the instructions cause the processor (120) to:
give a first score to the first application based on the first content received through the first application in case that schedule registration for the schedule-related application is completed;
display a notification message for configuration as the information-sharing application through the display module (160) in case that the cumulative score of the first application exceeds a configured first threshold score; and
configure the first application as the information-sharing application in response to a user input for the notification message.

5. The electronic device of claim 1 or 2, wherein the instructions cause the processor (120) to:
identify schedule-related information stored in the memory (130) in response to execution of the schedule-related application; and
generate the at least one piece of recommendation information (312) based on usage pattern information and usage history related to the identified schedule-related information.

6. The electronic device of one of claims 1 to 5, wherein the instructions cause the processor (120) to:
give a second score to a first phrase in case that it is identified that the first phrase has been registered as a schedule among the schedule-related information; and
generate the at least one piece of recommendation information (312) based on the first phrase in case that the cumulative score of the first phrase exceeds a configured second threshold score.

7. The electronic device of claim 1, wherein the instructions cause the processor (120) to:
execute the schedule-related application for a schedule registration; and
generate at least one piece of recommendation information (312) based on the schedule-related information (320) in response to an occurrence of the schedule registration event, and
wherein the occurrence of the schedule registration event detects a schedule registration instruction for registering at least one schedule while the schedule-related application is being executed.

8. The electronic device of one of claims 1 to 7, wherein the instructions cause the processor (120) to:
identify a first time point at which the schedule-related information (320) is extracted and a second time point for generating the at least one piece of recommendation information;
identify whether a time interval between the first time point and the second time point is within a configured first threshold value; and
generate the at least one piece of recommendation information (312) based on the schedule-related information (320) in case that the time interval is within the first threshold value.

9. The electronic device of one of claims 1 to 8, wherein the instructions cause the processor (120) to:
identify the number of threads that have occurred between the first time point and the second time point in case that the time interval exceeds the first threshold value;
identify whether the number of threads is within a configured second threshold value; and
generate the at least one piece of recommendation information (312) based on the schedule-related information in case that the number of threads is within the second threshold value.

10. The electronic device of one of claims 1 to 9, wherein the instructions cause the processor (120) to:
identify whether the thread is substantially occurred in the same session in case that the number of threads exceeds the second threshold value; and
generate the at least one piece of recommendation information (312) based on the schedule-related information in case that the thread occurs in the same session.

11. The electronic device of claim 1, wherein the instructions cause the processor (120) to:
identify a priority corresponding to the generated at least one piece of recommendation information;
determine a display order for the at least one piece of recommendation information (312) based on the identified priority; and
display the at least one piece of recommendation information (312) through the display module (160) according to the determined display order, and
wherein the priority corresponding to the at least one piece of recommendation information (312) is determined based on usage pattern information and usage history stored in the memory (130).

12. The electronic device of one of claims 1 to 11, wherein the instructions cause the processor (120) to:
configure a user interface to display the at least one piece of recommendation information in a list form;
display recommendation information with relatively high priority at the top of the list based on the identified priority; and
display the recommendation information with relatively high priority to be visually distinct from the rest of the recommendation information, or display the recommendation information with relatively high priority by configuring at least one of the color, size, font, and/or sound effects differently.

13. The electronic device of claim 1, wherein the instructions cause the processor (120) to extract at least one text included in the at least one piece of content as the schedule-related information (320) at least partially, and
wherein the schedule-related information (320) comprises at least one of information on a counterpart who performs a schedule, date information (321) on which the schedule is performed, information on a day of the week on which the schedule is performed, time information (322) on the schedule, and place information (323) on the schedule.

14. A method of displaying recommendation information, the method comprising:
identifying whether an application corresponding to the at least one piece of content is an information-sharing application, in response to reception of at least one piece of content;
extracting schedule-related information (320) based on the received at least one piece of content in case that the application is an information-sharing application;
generating at least one piece of recommendation information (312) based on the extracted schedule-related information (320) in response to execution of a schedule-related application; and
displaying the generated at least one piece of recommendation information (312).

15. The method of claim 14, further comprising:
receiving first content based on a first application;
executing the schedule-related application within a configured time in response to reception of the first content; and
configuring the first application as the information-sharing application in case that a schedule is registered based on the received first content.
